(19) Europäisches Patentamt / European Patent Office / Office européen des brevets

(11) **EP 2 428 810 B1**

(12) **FASCICULE DE BREVET EUROPEEN**

(45) Date de publication et mention de la délivrance du brevet:
**23.10.2013 Bulletin 2013/43**

(51) Int Cl.:
*G01S 5/08* (2006.01)      *G01S 3/74* (2006.01)

(21) Numéro de dépôt: **11179922.7**

(22) Date de dépôt: **02.09.2011**

(54) **Procédé de géo-localisation multi-émetteurs par traitement spatio-temporel**

Geo-Lokalisierungsverfahren mit mehreren Sender mit räumlich-zeitlicher Behandlung

Multi-transmitter geo-positioning method by space-time processing.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.09.2010 FR 1003580**

(43) Date de publication de la demande:
**14.03.2012 Bulletin 2012/11**

(73) Titulaires:
• **Thales**
  **92200 Neuilly Sur Seine (FR)**
• **Centre National de la Recherche Scientifique**
  **75016 Paris (FR)**

(72) Inventeurs:
• **Bosse, Jonathan**
  **92700 Colombes (FR)**
• **Ferreol, Anne**
  **92700 Colombes (FR)**
• **Lazarbal, Pascal**
  **94235 Cachan Cedex (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A1-2009/065943**

• **FERREOL A ET AL: "Space frequency direction finding in wide-band and multi-path contexts", ACOUSTICS, SPEECH, AND SIGNAL PROCESSING, 2000. ICASSP '00. PROCEEDINGS. 2000 IEEE INTERNATIONAL CONFERENCE ON 5-9 JUNE 2000, PISCATAWAY, NJ, USA,IEEE, vol. 5, 5 juin 2000 (2000-06-05), pages 3113-3116, XP010506667, ISBN: 978-0-7803-6293-2**
• **JIAN MAO ET AL: "A new algorithm for joint DOA and multipath delay estimation: separable dimension subspace method", STATISTICAL SIGNAL PROCESSING, 2001. PROCEEDINGS OF THE 11TH IEEE SIGN AL PROCESSING WORKSHOP ON 6-8 AUGUST 2001, PISCATAWAY, NJ, USA,IEEE, 6 août 2001 (2001-08-06), pages 504-507, XP010561187, ISBN: 978-0-7803-7011-1**
• **MICHAEL L MCCLOUD ET AL: "A New Subspace Identification Algorithm for High-Resolution DOA Estimation", IEEE TRANSACTIONS ON ANTENNAS AND PROPAGATION, IEEE SERVICE CENTER, PISCATAWAY, NJ, US, vol. 50, no. 10, 1 octobre 2002 (2002-10-01), XP011068626, ISSN: 0018-926X**
• **XAVIER MESTRE ET AL: "Modified Subspace Algorithms for DoA Estimation With Large Arrays", IEEE TRANSACTIONS ON SIGNAL PROCESSING, IEEE SERVICE CENTER, NEW YORK, NY, US, vol. 56, no. 2, 1 février 2008 (2008-02-01), pages 598-614, XP011198760, ISSN: 1053-587X, DOI: DOI:10.1109/TSP.2007.907884**

**Description**

L'invention concerne un procédé de géo- localisation multi- émetteurs de position $E_m$ à partir des signaux reçus sur plusieurs stations de réception $S_k$ éloignées qui sont composées de plusieurs capteurs (multi- capteurs) .

Elle trouve notamment son application dans le domaine technique du traitement d'antennes qui traite les signaux de plusieurs sources émettrices à partir des signaux reçus sur plusieurs capteurs. Un ensemble de capteurs sur une station est appelé, par la suite, réseau d'antennes ou réseau de capteurs et un ensemble de stations est appelé réseau de stations.

Ce procédé fait appel au domaine de la goniométrie, l'estimation de l'angle d'arrivée (ou incidence) d'un émetteur localisé au point $E_m$ à partir des signaux d'une station $S_k$ de réception multi-capteurs. Les coordonnées du point $E_m$ sont les composantes du vecteur $p_m$.

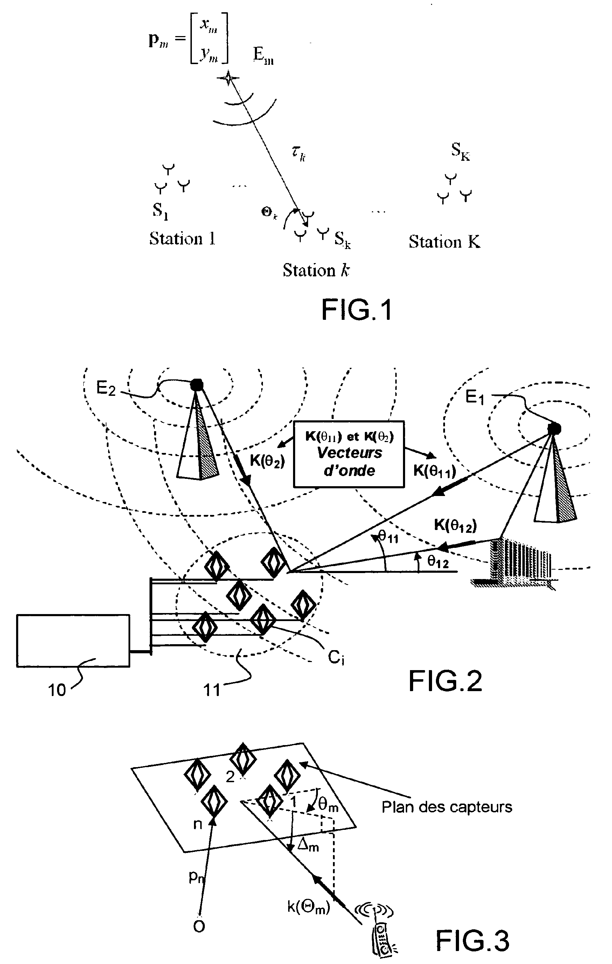

Comme il est indiqué sur la figure 1, la géo-localisation a pour objectif d'estimer les coordonnées $p_m$ des émetteurs Em dans le plan ou dans l'espace, ces coordonnées correspondent à celles des points $E_m$ représentés sur la figure 1. L'estimation de ces coordonnées se fait soit directement soit par l'intermédiaire de paramètres de localisation tels que les angles d'arrivées d'un émetteur sur chacune des stations.

Une technique connue de géo-localisation est la triangulation qui consiste à estimer les coordonnées d'un émetteur à partir de la connaissance des angles d'arrivées (ou incidences) de cet émetteur sur chacune des stations de réception.

Dans un contexte électromagnétique les capteurs sont des antennes et les sources radio-électriques se propagent suivant une polarisation dépendante de l'antenne d'émission. Dans un contexte acoustique les capteurs sont par exemple des microphones et les sources sont sonores.

La figure 2 montre un exemple de système 10 de traitement d'antennes où un réseau 11 de capteurs Ci reçoit les signaux de plusieurs sources ou émetteurs Em d'incidence $\Theta_m$. Un des objectifs des techniques de traitement d'antennes est de séparer ou d'extraire des informations (signal, paramètres,...) de chacune des sources en exploitant la diversité spatiale dépendante de la géométrie du réseau d'antennes d'une station et de l'incidence $\Theta_m$ des sources.

Les capteurs élémentaires d'un réseau d'une station de réception localisée en $S_k$ reçoivent les sources avec une phase et une amplitude qui dépendent en particulier des incidences des trajets et de la position des capteurs.

D'après la figure 3, l'incidence d'un trajet est définie par des paramètres de direction $\Theta_m = \{\theta_m$ et $\Delta_m \}$ où $\theta_m$ est l'azimut et $\Delta_m$ l'angle d'élévation.

Le problème technique qui va être traité dans la présente demande de brevet est celui de la géo-localisation d'émetteurs à partir des signaux enregistrés sur plusieurs stations multi-capteurs par le biais de l'estimation de différents paramètres de localisation, qui peuvent être l'angle d'arrivée sur une station (AOA : Angle Of Arrival), le temps d'arrivée sur une station (TOA : Time Of Arrival) ou la différence de temps d'arrivée entre deux stations (TDOA : Time Difference Of Arrival).

L'objectif du procédé est, notamment, de géo-localiser plusieurs émetteurs de bandes passantes inconnues à partir des signaux reçus sur chacune des stations et donc de résoudre un ou plusieurs des problèmes techniques suivants :

- géo-localiser de manière non ambiguë plusieurs émetteurs. Pour cela le problème technique consiste à associer à un même émetteur les AOA obtenus sur chacune des stations par une approche de traitement d'antennes. Cette association se fait en aveugle sans connaissance a *priori* des signaux émis (séquence binaire ou signal pilote, débit, forme d'onde, etc ...)
- la prise en compte optimale de la bande passante des signaux dans les algorithmes de géo-localisation qui sont du type MUSIC algorithme connu de l'Homme du métier:

  - sans faire d'a priori sur l'occupation spectrale des signaux émis,
  - en traitant de manière non ambiguë les signaux large bande au sens du réseau de stations ;

- optimiser les fonctions de coût des algorithmes de géo-localisation avec un coût de calcul le plus réduit possible.

Le procédé s'applique, par exemple, aux techniques de géo-localisation aveugles (ou passives), c'est-à-dire qu'aucune information *apriori* sur le signal émis n'est disponible contrairement aux cas de systèmes de positionnement de type GPS abréviation anglo-saxonne de Global Positioning System ou GALILEO.

La plupart des procédés de géo-localisation s'applique en trois grandes étapes : une étape d'estimation des paramètres de localisation effectuée indépendamment sur chacune des stations de réception puis une étape d'association des paramètres d'un même émetteur et enfin une étape de géo-localisation permettant d'estimer la position de chaque émetteur à partir de son ensemble de paramètre qui peuvent être les angles d'arrivées sur chacune des stations.

### ● Estimation des paramètres de localisation sur une station

La littérature est très abondante sur le problème de l'estimation des paramètres de localisation AOA ou TOA. Ces méthodes d'estimation sont appliquées sur une station ou 2 stations (pour le TDOA) de réception et ne permettent pas de remonter directement à la position des émetteurs, car le nombre de coordonnées à estimer est supérieur au nombre de paramètres de localisation estimés (Dans le cas de l'AOA sur une station on estime un seul paramètre de localisation). En conséquence pour géolocaliser un émetteur il est nécessaire d'utiliser plusieurs stations de réceptions pour estimer toutes les coordonnées de l'émetteur. Par exemple il est possible d'estimer la position d'un émetteur dans le plan à partir des AOA obtenus sur au moins 2 stations séparées (Triangulation). Les techniques traditionnelles de géo-localisation estiment les paramètres de localisation (AOA, TDOA, TOA) séparément sur chacune des stations de réception. En présence de plusieurs émetteurs, cela nécessite en général d'utiliser des informations a priori sur les signaux émis pour associer les paramètres de localisation d'un même émetteur.

### ● Localisation des émetteurs à partir des paramètres de localisation

Généralement, les techniques de géo- localisation sont surtout utilisées pour les communications numériques sans- fils ; le cas traité est alors celui d'une source (téléphone portable) pour lequel on dispose de plusieurs informations a priori, tel qu'un signal de référence ou une séquence d'étalement, qui permettent d'identifier un même émetteur sur des stations de réception éloignées. En présence de plusieurs sources il est nécessaire d'associer les paramètres de chacun des émetteurs (même signal de référence séquence d'étalement, débit, ..) avant d'effectuer l'étape de géolocalisation à partir des paramètres de localisation estimés sur plusieurs stations.

### ● Estimation et association des paramètres de localisation

La demande de brevet W02009/065943 du Demandeur traite de toute la chaîne de traitement de géo-localisation aveugle (ou passive) de sources en présence de multi-trajets à partir d'une estimation couplée des angles d'arrivée (AOA) et des différences de temps d'arrivée des trajets d'une même source (TDOA) entre deux stations séparées. Toutefois l'estimation couplée des paramètres de localisation (AOA-TDOA) n'exploite pas simultanément la totalité des signaux reçus par les stations éloignées. En particulier la méthode n'exploite pas l'AOA de la seconde station et la méthode se dégrade (voire ne fonctionne plus) en présence de sources bande étroites.

### ● Estimation de la position des émetteurs directement à partir de l'ensemble des signaux reçus

Peu de travaux ont proposé des algorithmes de géo-localisation effectuant une estimation conjointe des paramètres de géo-localisation directement à partir des signaux reçus sur l'ensemble des stations et fournissant en sortie soit directement la position des émetteurs, soit les paramètres de localisation des émetteurs conjointement estimés. Ces travaux ont l'inconvénient de ne pas exploiter de manière optimale la bande des signaux. En effet, ces méthodes ont pour point commun de mettre en oeuvre les méthodes à haute résolution utilisées en goniométrie qui nécessitent une modélisation particulière des signaux reçus. Plus particulièrement, en goniométrie on suppose classiquement que le retard induit par la propagation d'un signal d'un capteur à l'autre du réseau de la station peut se modéliser par un déphasage : c'est ce que l'on appelle l'hypothèse bande étroite. Cette hypothèse couramment vérifiée pour un réseau de capteurs typique en goniométrie est à l'origine des algorithmes à haute résolution qui fonctionnent à partir d'un mélange linéaire de sources. En revanche cette hypothèse est rarement vérifiée pour les signaux issus de plusieurs stations multi-voies éloignées où le modèle n'est plus linéaire, mais convolutif car les signaux reçus sur les stations sont des répliques retardées du signal émis. Dans ce contexte, la plupart des algorithmes de localisation estimant directement la position des émetteurs connus se ramènent au prix d'une solution sous-optimale à une situation bande étroite au sens du réseau de stations.

Dans d'autres modes de mise en oeuvre, on se ramène à l'hypothèse bande étroite au niveau du réseau de stations en découpant le signal reçu en plusieurs sous-bandes étroites. Cela à l'inconvénient de diminuer considérablement le produit bande de traitement fois temps d'observation dans chaque sous bande, ce qui a pour effet de diminuer la précision et la résolution. D'autre part, la méthode n'utilise pas la totalité de l'information issue de tous les canaux fréquentiels en ne prenant pas en compte, par exemple, les intercorrélations des signaux issus de deux canaux fréquentiels distincts.

Il est aussi possible de résoudre le problème de l'hypothèse bande étroite au niveau des stations, partiellement, en modélisant un signal large bande en plusieurs signaux composites bande étroite (composantes) au niveau du réseau de stations. Ceci présente comme inconvénient de très vite saturer en nombre de composantes les algorithmes de type MUSIC, algorithme connu de l'Homme du métier,. En effet, le nombre maximal de composantes de sources géolocalisables doit être strictement inférieur au nombre de capteurs de l'ensemble des stations.

L'enseignement technique du document de Anne Ferreol et al, intitulé « Space frequency direction finding in wide-band and multi-path contexts », ACOUSTICS, SPEECH, AND SIGNAL PROCESSING, 2000. ICASSP'00. Proceeding S. 2000 IEEE international conference on 5-9 June 2000, Piscataway, NJ, USA, IEEE, vol.5, 5 juin 2000 pages 3113-3116, XP010506667, traite de l'estimation des directions d'arrivées en contexte multi-trajets sur une seule station de base. C'est à dire que la station de base multi capteur reçoit de chaque émetteur, une somme de signaux corrélés entre eux ayant des angles d'arrivée différents ainsi que des atténuations différentes selon le trajet. Le problème est large bande au sens de la station de base (distance entre les capteurs de la station grande devant l'inverse de la bande des émetteurs). L'apport du spatio-temporel est de permettre l'estimation de toutes les directions d'arrivées de tous les trajets.

Le document de Jian Mao et al, intitulé « a new algorithm for joint DOA and multipath delay estimation : separable dimension subspace method » Statistical signal Processing, 2001, Proccedings of the 11 TH IEEE SIGN AL Processing Workshop on 6-8 August 2001, Piscataway, NJ, USA, IEEE, 6 août 2001, pages 504-507, XP010561187, dvulgue un algorithme pour estimer conjointement les directions d'arrivées DOAs et les retards des trajets multiples dans des systèmes de communication sans fil.

En résumé, les procédés et les systèmes précités de l'art antérieur ne permettent pas, de traiter de manière cohérente l'ensemble de la bande du signal en exploitant toute l'information disponible et de localiser directement les sources dans le plan ou l'espace.

De façon à ne pas saturer en nombre de sources composites au niveau du réseau de stations, le procédé selon l'invention repose sur une approche spatio-temporelle qui permet d'accroître la taille du vecteur observation, constitué des signaux reçus sur chaque capteur, en construisant une observation plus grande composée de plusieurs décalages ou en anglo-saxon « shifts » temporels des observations des signaux capteurs observés sur l'ensemble des stations. Cette approche, sans toutefois proposer d'algorithme de localisation dans le plan ou dans l'espace, a été utilisée en goniométrie afin de pouvoir estimer les angles d'arrivées d'un plus grand nombre de sources en exploitant leur diversité spectrale en terme de bande passante, de fréquence porteuse et de canal multi-trajets. Par exemple avec une telle approche, le traitement spatio-temporel permet de traiter un nombre d'émetteurs strictement inférieur au nombre de capteurs lorsqu'il y a présence de multitrajets et lorsque les émetteurs occupent toute la bande de réception. D'autre part, lorsque les émetteurs n'occupent pas toute la bande de réception la capacité du traitement spatio-temporel en termes de nombre de sources dépasse le nombre de capteurs.

L'approche proposée dans ce brevet est basée sur un traitement spatio-temporel des signaux reçus sur les antennes ou capteurs des stations qui permet de traiter de manière cohérente et adaptative l'ensemble des canaux fréquentiels des sources sans toutefois saturer en nombre de composantes fréquentielles le réseau de stations. Comme indiqué aux paragraphes précédents, la méthode consiste à exploiter simultanément tous les signaux reçus sur les stations à l'aide d'un modèle paramétrique associant naturellement les paramètres d'un même émetteur. Cela permet d'éviter une étape d'estimation des paramètres de localisation séparée sur chacune des stations (sous optimale en terme de performances) qui nécessite une étape d'association des paramètres d'un même émetteur afin d'effectuer une estimation non ambiguë de la position des émetteurs.

L'invention concerne un procédé de géolocalisation de $M$ émetteurs incidents à un réseau de $K$ stations Sk composées chacune de $N_k$ capteurs élémentaires et des moyens de traitement du signal, caractérisé en ce qu'il comporte au moins :

a) une étape au cours de laquelle, le vecteur d'observation est allongé en intégrant la période $T_e$ d'échantillonnage dans le vecteur d'observation de la manière suivante :

$$\mathbf{y}(t) = \begin{bmatrix} \mathbf{x}(t) \\ \mathbf{x}(t-T_e) \\ \vdots \\ \mathbf{x}(t-LT_e) \end{bmatrix} = \sum_{m=1}^{M}\sum_{l=1}^{L} \mathbf{z}(f_l) \otimes \begin{bmatrix} \rho_{1,lm}\mathbf{a}_1(\boldsymbol{\Theta}_{1,m}) \\ \rho_{2,lm}\mathbf{a}_2(\boldsymbol{\Theta}_{2,m}) \\ \vdots \\ \rho_{K,lm}\mathbf{a}_K(\boldsymbol{\Theta}_{K,m}) \end{bmatrix} s_m(f_l, t-\tau_{1,m}) + \mathbf{n}(t)$$

où $T_e$ et $\rho_{k,lm} = \rho_{k,m}e^{-j2\pi f_l(\tau_k(p_m)-\tau_1(p_m))}$, est la période d'échantillonnage correspondant à la bande des récepteurs selon le théorème de Shannon, $\mathbf{x}(t) = [\mathbf{x}_1(t) \dots \mathbf{x}_k(t)]^T$ correspond à l'expression du signal reçu sur l'ensemble des K stations,
le signal sur la $k$-$ième$ station s'écrit :

$$\mathbf{x}_k(t) = \begin{bmatrix} x_{k,1}(t) \\ x_{k,2}(t) \\ \vdots \\ x_{k,N_k}(t) \end{bmatrix} = \sum_{m=1}^{M} \rho_{k,m}\, \mathbf{a}_k\left(\Theta_{k,m}\right) s_m\left(t - \tau_{k,m}\right) + \mathbf{n}_k(t)$$

- $x_{k,n}(t)$ est le *t-ième* échantillon du signal en sortie du *n-ième* capteur de la *k-ième* station, échantillonné à la fréquence $F_e = 1/T_e$
- $s_m(t)$ correspond au *m-ième* signal temporel émis par la source à l'instant *t*, en considérant que les signaux des émetteurs sont indépendants entre eux,
- $\rho_{k,m}$ et $\Theta_{k,m}$ sont respectivement l'amplitude complexe et le vecteur paramètre d'intérêt de la *m-ième* source sur la *k-ième* station, le vecteur $\Theta_{k,m}$ est la direction d'arrivée sur la station *k*, qui peut être vue comme une fonction de la position dans le plan ou l'espace,
- $\tau_{k,m}$ est le temps de parcours entre la *m-ième* source et la station *k*,
- $\mathbf{a}_k(\Theta)$ est la réponse du *k-ième* réseau de capteurs à une source bande étroite de fréquence $f_0$ au niveau de la station k qui dépend du paramètre $\Theta$ La porteuse $f_0$ correspond à la fréquence centrale des récepteurs,
- $\mathbf{n}_k(t)$ est le bruit additif présent sur la *k-ième* station à l'instant *t*.

b) une étape d'estimation conjointe des angles d'arrivées ou des positions des émetteurs sur chacune desdites stations exploitant le modèle linéaire suivant

$$\mathbf{y}(t) = \begin{bmatrix} \mathbf{x}(t) \\ \mathbf{x}(t-T_e) \\ \vdots \\ \mathbf{x}(t-LT_e) \end{bmatrix} = \sum_{m=1}^{M}\sum_{l=1}^{L} \mathbf{z}(f_l) \otimes \begin{bmatrix} \rho_{1,lm}\mathbf{a}_1\left(\Theta_{1,m}\right) \\ \rho_{2,lm}\mathbf{a}_2\left(\Theta_{2,m}\right) \\ \vdots \\ \rho_{K,lm}\mathbf{a}_K\left(\Theta_{K,m}\right) \end{bmatrix} s_m(f_l, t - \tau_{1,m}) + \mathbf{n}(t) \text{ avec}$$

$\rho_{k,lm} = \rho_{k,m}e^{-j2\pi f_l(\tau_l(\overline{pm}) - \tau_1(p_m))}$, en vue d'une géo- localisation ou une étape de géo- localisation directe par estimation conjointe des coordonnées des émetteurs dans le plan ou dans l'espace, $s_m(f_l, t)$ correspond au signal d'un filtre de bande 1/LTe centré autour de la fréquence fl où m correspond à la *m- ième* source,

c) une étape de géo-localisation des sources à partir du K-uplets d'incidence lorsqu'il est effectué une estimation conjointe des angles.

L'approche spatio-temporelle permet de traiter un plus grand nombre de sources composites bande étroite et ainsi de traiter correctement les sources large bande au sens du réseau de stations.

D'autres caractéristiques et avantages de la présente demande de brevet invention apparaîtront mieux à la lecture des exemples donnés à titre illustratif et nullement limitatif annexés des figures qui représentent :

- La figure 1 un émetteur se propageant vers un réseau de stations,
- La figure 2, deux émetteurs se propageant vers un réseau de capteurs d'une station,
- La figure 3, une incidente d'une source $\Theta_m = \{\theta_m, \Delta_m\}$ ou $k(\Theta_m)$ le vecteur d'onde.

La description qui va suivre est donnée comme exemple en relation avec un système tel que celui schématisé à la figure 2 composé d'un système 10 de traitement des signaux, de plusieurs capteurs Ci associés à une station $S_k$ recevant les signaux. Le système de traitement 10 est pourvu d'un processeur adapté à l'exécution des étapes des différents modes de mise en oeuvre du procédé selon l'invention qui va être décrite ci-après. Le système comporte K stations composées chacune de $N_k$ capteurs élémentaires.

**Modélisation et formulation du problème**

**Modélisation**

Le procédé comme il a été mentionné ci-dessus, concerne la géo-localisation de *M* émetteurs incidents à un réseau de $K$ stations composées chacune de $N_k$ capteurs élémentaires. Le terme source ou émetteur est utilisé indifféremment dans la présente description pour désigner un même objet.

En présence de $M$ sources incidentes, l'expression du signal reçu sur cette *k-ième* station s'écrit :

$$\mathbf{x}_k(t) = \begin{bmatrix} x_{k,1}(t) \\ x_{k,2}(t) \\ \vdots \\ x_{k,N_k}(t) \end{bmatrix} = \sum_{m=1}^{M} \rho_{k,m} \, \mathbf{a}_k\left(\Theta_{k,m}\right) s_m\left(t - \tau_{k,m}\right) + \mathbf{n}_k(t) \qquad (1)\,.$$

- $x_{k,n}(t)$ est le *t-ième* échantillon du signal en sortie du n-ième capteur de la *k-ième* station, échantillonné à la fréquence $F_e = 1/T_e$.
- $s_m(t)$ correspond au *m-ième* signal temporel émis par la source à l'instant $t$. On considère que les signaux des émetteurs sont indépendants entre eux.
- $\rho_{k,m}$ et $\Theta_{k,m}$ sont respectivement l'amplitude complexe et le vecteur paramètre d'intérêt de la *m-ième* source sur la *k-ième* station. Le vecteur $\Theta_{k,m}$ est la direction d'arrivée sur la station k, qui peut être vue comme une fonction de la position dans le plan ou l'espace.
- est le temps de parcours entre la *m-ième* source et la station k.
- $\mathbf{a}_k(\Theta)$ est la réponse du *k-ième* réseau de capteurs à une source bande étroite de fréquence $f_0$ au niveau de la station k qui dépend du paramètre $\Theta$ La porteuse $f_0$ correspond à la fréquence centrale des récepteurs, la fréquence porteuse correspond à la fréquence centrale des filtres analogiques des récepteurs
- $\mathbf{n}_k(t)$ est le bruit additif présent sur la *k-ième* station à l'instant $t$.

Le vecteur d'observation $\mathbf{x}(t)$ constitué des signaux reçus sur l'ensemble des stations s'écrit d'après (1) :

$$\mathbf{x}(t) = \begin{bmatrix} \mathbf{x}_1(t) \\ \mathbf{x}_2(t) \\ \vdots \\ \mathbf{x}_K(t) \end{bmatrix} = \sum_{m=1}^{M} \begin{bmatrix} \rho_{1,m}\mathbf{a}_1\left(\Theta_{1,m}\right) s_m\left(t - \tau_{1,m}\right) \\ \rho_{2,m}\mathbf{a}_2\left(\Theta_{2,m}\right) s_m\left(t - \tau_{2,m}\right) \\ \vdots \\ \rho_{K,m}\mathbf{a}_K\left(\Theta_{K,m}\right) s_m\left(t - \tau_{K,m}\right) \end{bmatrix} + \mathbf{n}'(t) \qquad (2)\,.$$

Une seule observation selon l'équation (2) contient donc les signaux reçus sur les différents capteurs, les capteurs d'une station donnée pouvant présenter des géométries différentes d'une station à l'autre

Où $\mathbf{n}'(t)$ est le vecteur bruit multi- stations suivant:

$$\mathbf{n}'(t) = \begin{bmatrix} \mathbf{n}_1(t) \\ \mathbf{n}_2(t) \\ \vdots \\ \mathbf{n}_K(t) \end{bmatrix} \qquad (3)\,.$$

On construit ensuite le vecteur d'observation en allongeant l'observation ce qui correspond à obtenir l'observation spatio-temporelle suivante

$$\mathbf{y}(t) = \begin{bmatrix} \mathbf{x}(t) \\ \mathbf{x}(t - T_e) \\ \vdots \\ \mathbf{x}(t - LT_e) \end{bmatrix} \qquad (4).$$

Où $T_e = 1/F_e$ est la période d'échantillonnage. Cela revient à décomposer les signaux incidents en composantes de bande $B_L = 1/(LT_e)$ dont la largeur est réglable par le nombre de shift L. En supposant alors que

$$LT_e >> \max_{1 \le m \le M, 1 \le k \le K} \left\{ \left| \tau_{k,m} - \tau_{1,m} \right| \right\},$$

c'est-à-dire que le produit (Bande x Temps) (Bande= $B_L$) de traversée de la source à travers le réseau doit être très inférieur à 1, il est possible de vérifier l'hypothèse Bande Etroite (expression connue de l'Homme du métier) et d'écrire :

$$\mathbf{y}(t) = \sum_{m=1}^{M} \sum_{l=1}^{L} \mathbf{z}(f_l) \otimes \begin{bmatrix} \rho_{1,lm} \mathbf{a}_1 \left( \Theta_{1,m} \right) \\ \rho_{2,lm} \mathbf{a}_2 \left( \Theta_{2,m} \right) \\ \vdots \\ \rho_{K,lm} \mathbf{a}_K \left( \Theta_{K,m} \right) \end{bmatrix} s_m \left( f_l, t - \tau_{1,m} \right) + \mathbf{n}(t) \qquad (5).$$

où $\otimes$ désigne le produit de Kronecker, $\rho_{k,lm} = \rho_{k,m} e^{-j2\pi f_l(\tau_k(p_m) - \tau_1(p_m))}$ un gain complexe qui dépend maintenant de la fréquence $f_l = (l/L) F_e$, et de la position $\mathbf{p}_m$ de la source.

$$\mathbf{z}(f) = \begin{bmatrix} 1 \\ e^{j2\pi f} \\ \left( e^{j2\pi f} \right)^2 \\ \vdots \\ \left( e^{j2\pi f} \right)^L \end{bmatrix} \qquad (6).$$

où le signal $s_m(f_l, t)$ est la sortie d'un filtre de bande $1/LT_e$ centré autour de la fréquence $f_l$ du signal reçu par la première station.

Dans le cas d'une hypothèse Bande Etroite, on peut écrire de manière linéaire l'observation, L est un facteur d'ajustement, ce qui correspond à une décomposition du signal en sous-bande étroite de bande $1/(LT_e)$, dans cet exemple en L sous-bandes étroites.

Le vecteur bruit s'écrit :

$$\mathbf{n}(t) = \begin{bmatrix} \mathbf{n}'(t) \\ \mathbf{n}'(t - T_e) \\ \vdots \\ \mathbf{n}'(t - LT_e) \end{bmatrix} \qquad (7).$$

On peut réécrire l'équation (5) de la manière suivante

$$\mathbf{y}(t) = \sum_{m=1}^{M} \sum_{l=1}^{L} \mathbf{b}(f_l, \boldsymbol{\rho}_m, \boldsymbol{\varphi}_m) \, s_m(f_l, t - \tau_{1,m}) + \mathbf{n}(t) \text{ avec } \mathbf{b}(f, \boldsymbol{\rho}, \boldsymbol{\varphi}) = \mathbf{z}(f) \otimes \mathbf{u}(\boldsymbol{\rho}, \boldsymbol{\varphi}) \qquad (8) \, .$$

où $\varphi_m = (\Theta^T_{l,m} \, ... \, \Theta^T_{K,m})^T$ est le vecteur contenant les incidences de la *m- ième* source sur toutes les stations et où

$$\mathbf{u}(\boldsymbol{\rho}_{lm}, \boldsymbol{\varphi}_{lm}) = \begin{bmatrix} \rho_{1,lm}\mathbf{a}_1(\boldsymbol{\Theta}_{1,m}) \\ \rho_{2,lm}\mathbf{a}_2(\boldsymbol{\Theta}_{2,m}) \\ \vdots \\ \rho_{K,lm}\mathbf{a}_K(\boldsymbol{\Theta}_{K,m}) \end{bmatrix} \qquad (9)$$

$$\boldsymbol{\rho}_{lm} = \begin{pmatrix} \rho_{1,lm} & \rho_{2,lm} & ... & \rho_{K,lm} \end{pmatrix}^T \qquad (10)$$

Le vecteur $\mathbf{b}$ ($f$, $\rho$, $\varphi$) peut aussi s'écrire de la manière suivante

$$\mathbf{b}(f, \boldsymbol{\rho}, \boldsymbol{\varphi}) = \mathbf{V}(\boldsymbol{\varphi})(\mathbf{z}(f) \otimes \boldsymbol{\rho}) \qquad (11)$$

où

$$\mathbf{V}(\boldsymbol{\varphi}) = \mathbf{I}_L \otimes diag(\mathbf{a}_1(\boldsymbol{\Theta}_1) \quad ... \quad \mathbf{a}_K(\boldsymbol{\Theta}_K)) \qquad (12)$$

On note la matrice de covariance du signal $\mathbf{x}$ ($t$) par $\mathbf{R}_{yy} = E[\mathbf{y}(t)\mathbf{y}^H(t)]$. L'estimation de cette matrice sur $T$ échantillons s'écrit:

$$\hat{\mathbf{R}}_{yy} = \frac{1}{T} \sum_{i=1}^{T} \mathbf{y}(i \times T_e)\mathbf{y}^H(i \times T_e) \qquad (13)$$

où $(.)^H$ désigne la transposée conjuguée. On considère que les signaux $s_m$ ($t$) sont approximés par une somme finie de $Q_m \leq L$ sources (ou composantes) bande étroite pour l'ensemble du réseau. Dans ces conditions, la dimension de l'espace signal engendré par l'ensemble {$\mathbf{b}$ ($f_l$, $\rho_{lm}$, $\varphi_m$) $s_m$ ($f_l$, $t- \tau_{l,m}$), $1 \leq m \leq M$, $1 \leq l \leq L$} des signatures $\mathbf{V}(\varphi_m)$ ($\mathbf{z}$ ($f_l$) $\otimes \rho_{lm}$) des composantes bande étroite doit être inférieure à la dimension $N \times L$ de la matrice de covariance $\hat{\mathbf{R}}_{yy}$.

## Estimation du paramètre d'intérêt $\varphi_m$ en vue d'une géo-localisation

Le paramètre d'intérêt $\varphi_m$- $(\Theta^T_{l,m} \, ... \, \Theta^T_{K,m})^T$ (vecteur contenant les incidences de la m- ième source sur toutes les stations) peut être estimé de façon conjointe avec les paramètres de nuisance ($f_l$, $\rho_{lm}$) par un algorithme à haute résolution de type MUSIC, ou par toutes autres méthodes de la littérature basé sur ce modèle (en particulier : ML. Mc Cloud and L.L Scharf « A new subspace identification algorithm for high resolution DOA estimation » IEEE Trans on Antenna and propagation Vol 50, N°10, Oct 2002 ainsi que les algorithmes de la famille du maximum de vraisemblance, et plus récemment les algorithmes exploitant la théorie des grandes matrices aléatoires (en particulier X.Mestre et M.A. Lagunas « Modified subspace algorithms for DOA estimation with large arrays », IEEE Transactions on signal processing, vol. 56, n°2, Feb 2008) . Il est aussi envisageable d'appliquer une méthode de type à haute résolution exploitant les statistiques d'ordre supérieur (ou 2q) de l'observation $\mathbf{y}$ ($t$) ) car l'observation multi- stations et spatio- temporelle $\mathbf{y}$ ($t$) se modélise suivant une combinaison linéaire de composantes bande étroite de signature $\mathbf{b}$ ($f_l$, $\rho_{lm}$, $\varphi_m$) $=\mathbf{z}$ ($f_l$) $\otimes\mathbf{u}$ ($\rho_{lm}$, $\varphi_m$) .

En conséquence en utilisant une approche de type MUSIC avec les statistiques d'ordre 2, les vecteurs directeurs multi- stations $\mathbf{b}\,(f_l,\,\rho_m,\,\varphi_m)=\mathbf{z}\,(f_l)\otimes\mathbf{u}\,(\rho_{lm},\,\varphi_m)$ engendrent l'espace signal de la matrice de covariance $\mathbf{R}_{yy}$ de l'observation $\mathbf{y}\,(t)$. Sachant que $\mathbf{b}\,(f,\,\rho,\,\varphi)=\mathbf{U}\,(\varphi,\,f)\,\rho$, une approche de type MUSIC consiste alors à minimiser le critère suivant :

$$C\left(\varphi,f,\rho\right)=\frac{\mathbf{b}^{H}\left(f,\rho,\varphi\right)\mathbf{\Pi}_{b}\mathbf{b}\left(f,\rho,\varphi\right)}{\mathbf{b}^{H}\left(f,\rho,\varphi\right)\mathbf{b}\left(f,\rho,\varphi\right)}$$

$$=\frac{\rho^{H}\mathbf{U}^{H}\left(\varphi,f\right)\mathbf{\Pi}_{b}\mathbf{U}\left(\varphi,f\right)\rho}{\rho^{H}\mathbf{U}^{H}\left(\varphi,f\right)\mathbf{U}\left(\varphi,f\right)\rho} \qquad (14)$$

$$=\frac{\left(\mathbf{z}(f)\otimes\rho\right)^{H}\mathbf{V}^{H}\left(\varphi,\right)\mathbf{\Pi}_{b}\mathbf{V}\left(\varphi\right)\left(\mathbf{z}(f)\otimes\rho\right)}{\left(\mathbf{z}(f)\otimes\rho\right)^{H}\mathbf{V}^{H}\left(\varphi\right)\mathbf{V}\left(\varphi\right)\left(\mathbf{z}(f)\otimes\rho\right)}$$

Où $\mathbf{U}\,(\varphi,\,f)=\mathbf{z}\,(f)\otimes diag\,(\mathbf{a}_{1}\,(\psi_{1m})\,\ldots\,\mathbf{a}_{K}\,(\Psi_{K,m}))$, $\rho$ est le paramètre de nuisance contenant les amplitudes complexes, $\mathbf{I}_{L}$ est la matrice identité de dimension $L\times L$ et $diag\,(\mathbf{A})$ la matrice bloc- diagonale constituée des colonnes de la matrice $\mathbf{A}$. La matrice $\mathbf{\Pi}_{b}$ suivante est le projecteur bruit de MUSIC obtenu à partir des éléments propres de $\mathbf{R}_{yy}$

$$\mathbf{\Pi}_{b}=\mathbf{I}_{NL}-\mathbf{E}_{s}\mathbf{E}_{s}^{H} \qquad (15)$$

où $\mathbf{E}_{s}=[\mathbf{u}_{1}\,\mathbf{u}_{2}\,\ldots\,\mathbf{u}_{D}]$ est l'espace signal tel que $\mathbf{u}_{d}$ est le vecteur propre associé à la $d$- ième plus grande valeur propre de l'estimé $\hat{\mathbf{R}}_{yy}$ de la matrice de covariance de l'observation $\mathbf{y}\,(t)$ sachant que le rang de $\hat{\mathbf{R}}_{yy}$- $\hat{\mathbf{R}}_{nn}$ vaut $D$, l'entier $D$ correspondant alors au nombre de composantes bande étroites observées (ou détectées) dans le vecteur $\mathbf{y}\,(t)$ où det $(\mathbf{M})$ désigne le déterminant de la matrice $\mathbf{M}$.

Dans le procédé le critère multi- dimensionnel $C\,(\varphi,\,f,\,\rho)$ est optimisé, par exemple, de deux manières différentes.

Une première approche de type MUSIC consiste à estimer l'ensemble $\Phi=\{\varphi_{1}\,\cdots\,\varphi_{M}\}$ des paramètres de localisation, puis de déduire des composantes fréquentielles de chacune des sources.

Les composantes $\varphi_{m}$ de $\Phi=\{\varphi_{1}\,\ldots\,\varphi_{M}\}$ sont estimées conjointement en recherchant les $M$ minima du critère de l'équation (16). Ce critère est obtenu en minimisant le critère de l'équation (14) avec le vecteur $\mathbf{z}\,(f)\otimes\rho$ pour toute valeur de $\varphi$. On obtient alors un critère qui ne dépend plus que du paramètre de localisation $\varphi$ (ensemble des directions d'arrivées sur chacune des stations ou position de l'émetteur) :

$$J_{d}\left(\varphi\right)=\frac{\det\left(\mathbf{V}^{H}\left(\varphi\right)\mathbf{\Pi}_{b}\mathbf{V}\left(\varphi\right)\right)}{\det\left(\mathbf{V}^{H}\left(\varphi\right)\mathbf{V}\left(\varphi\right)\right)} \qquad (16)$$

Pour chaque minimum $\hat{\varphi}_{m}$ du critère (16), le critère permettant d'estimer les fréquences $f_{l}$ de la source correspondante s'écrit

$$J_{m}\left(f\right)=\frac{\det\left(\mathbf{U}^{H}\left(\hat{\varphi}_{m},f\right)\mathbf{\Pi}_{b}\mathbf{U}\left(\hat{\varphi}_{m},f\right)\right)}{\det\left(\mathbf{U}^{H}\left(\hat{\varphi}_{m},f\right)\mathbf{U}\left(\hat{\varphi}_{m},f\right)\right)} \qquad (17)$$

La deuxième approche consiste à estimer l'ensemble des composantes fréquentielles $\Gamma=\{f_{1}\,\ldots\,f_{l}\}$ puis à déduire l'ensemble $\Phi_{l}=\{\varphi_{1_{l}}\,\ldots\,\varphi_{M_{l}}\}$ des paramètres de localisation à chacune des fréquences $f_{l}$.

Cette approche permet d'exploiter la diversité en fréquence des émetteurs qui ne partagent pas forcément les mêmes fréquences. Dans ce cas on considère que le vecteur $\mathbf{u}\,(\rho,\,\varphi)$ est un paramètre de nuisance et que le paramètre d'intérêt est la fréquence. Dans ce cas la signature $\mathbf{z}\,(f_{l})\otimes\mathbf{u}\,(\rho_{lm},\,\varphi_{m})$ d'une composante bande étroite se récrit de la manière suivante

$$\mathbf{z}(f) \otimes \mathbf{u}(\rho,\varphi) = \mathbf{W}(f)\mathbf{u}(\rho,\varphi)$$
$$\text{avec } \mathbf{W}(f) = diag\big(\mathbf{z}(f)\big) \otimes \mathbf{I}_{NK} \qquad (18)$$

Le critère de MUSIC de l'équation (14) se réécrit alors de la manière suivante

$$C(\varphi, f, \rho) = \frac{\mathbf{u}(\varphi,\rho)^H \, \mathbf{W}^H(f)\, \mathbf{\Pi}_b \mathbf{W}(f)\mathbf{u}(\varphi,\rho)}{\mathbf{u}(\varphi,\rho)^H \, \mathbf{W}^H(f)\, \mathbf{W}(f)\mathbf{u}(\varphi,\rho)} \qquad (19)$$

Sachant que la valeur du critère $C(\varphi_m, f_l, \rho_m)$ est théoriquement nulle, la minimisation de $C(\varphi, f, \rho)$ avec $u(\rho, \varphi)$ se réduit à

$$J_f(f) = \frac{\det\big(\mathbf{W}^H(f)\mathbf{\Pi}_b \mathbf{W}(f)\big)}{\det\big(\mathbf{W}^H(f)\mathbf{W}(f)\big)} \qquad (20)$$

Les fréquences de l'ensemble $\Gamma = \{f_1 \dots f_l\}$ sont alors obtenues en cherchant les $l$ fréquences de l'ensemble $\Gamma$ qui minimisent le critère $J_f(f)$. A partir d'une des fréquences $f_i$ il est possible d'estimer l'ensemble $\Phi_i = \{\varphi_{1_i} \dots \varphi_{M_i}\}$ des paramètres de localisation à cette fréquence. Sachant que $J_f(f_i)$ est théoriquement nul, on sait que les $M_i$ vecteurs propres associés aux valeurs propres proches de zéro de la matrice $(\mathbf{W}^H(f)\mathbf{W}(f))^{-1}(\mathbf{W}^H(f)\mathbf{\Pi}_b\mathbf{W}(f))$ s'écrivent :

$$\mathbf{v}_j^{\,i} = \sum_{p=1}^{M_i} \alpha_{jp}\mathbf{u}(\rho_{pi},\varphi_{pi}) \qquad (21)$$

En conséquence pour estimer les paramètres de localisation $\Phi_i = \{\varphi_{1_i} \dots \varphi_{M_i}\}$, on constitue la matrice de covariance suivante de dimension $N \mathrm{x} N$ suivante

$$\mathbf{R}_i = \sum_{j=1}^{M_i} \mathbf{v}_j^{\,i}\big(\mathbf{v}_j^{\,i}\big)^H \qquad (22)$$

Il est à noter que la matrice $\mathbf{R}_i$ est de dimension largement plus petite que $\mathbf{R}_y$ qui est de dimension $NL \mathrm{x} NL$. La méthode MUSIC pour estimer les paramètres $\Phi_i = \{\varphi_{1_i} \dots \varphi_{M_i}\}$ consiste à minimiser le critère suivant :

$$C_i(\varphi, \rho) = \frac{\mathbf{u}^H(\rho,\varphi)\mathbf{\Pi}_i\mathbf{u}(\rho,\varphi)}{\mathbf{u}^H(\rho,\varphi)\mathbf{u}(\rho,\varphi)} \qquad (23)$$

Où la matrice $\mathbf{\Pi}_i$ suivante est le projecteur bruit de MUSIC obtenu à partir des éléments propres de $\mathbf{R}_i$ (Les $N\text{-}M_i$ plus faible valeur propres de la matrice). Sachant que

$$\mathbf{u}(\rho,\varphi) = \mathbf{A}(\varphi)\rho \text{ avec } \mathbf{A}(\varphi) = diag\big(\mathbf{a}_1(\mathbf{\Theta}_1) \quad \dots \quad \mathbf{a}_K(\mathbf{\Theta}_K)\big) \qquad (24)$$

Le critère de l'équation (23) peut se réduire à la minimisation du critère suivant

$$C_i^{opt}(\varphi) = \frac{\det\left(\mathbf{A}^H(\varphi)\mathbf{\Pi}_i\mathbf{A}(\varphi)\right)}{\det\left(\mathbf{A}^H(\varphi)\mathbf{A}(\varphi)\right)} \tag{25}$$

Les paramètres de localisations $\varphi_{m_i}$ sont alors les $M_i$ minima du critère $C_i^{opt}(\varphi)$.

Dans la sous- variante exposée ci- dessous on exploite le fait que $\rho_{k,im} = \rho_{k,m} \exp\left(-j2\pi f_i\left(\tau_k(\mathbf{p}_m) - \tau_1(\mathbf{p}_m)\right)\right)$ et donc que

$$\boldsymbol{\rho}_{im} = \Lambda_i(\mathbf{p}_m) \times \boldsymbol{\rho}_m$$

$$\text{avec} \begin{cases} \boldsymbol{\rho}_m = \begin{bmatrix} \rho_{1,m} & \cdots & \rho_{K,m} \end{bmatrix}^T \\ \Lambda_i(\mathbf{p}_m) = diag\left\{\exp(-j2\pi f_i\Delta\tau_1(\mathbf{p}_m)) \quad \cdots \quad \exp(-j2\pi f_i\Delta\tau_K(\mathbf{p}_m))\right\} \\ \Delta\tau_k(\mathbf{p}_m) = \tau_k(\mathbf{p}_m) - \tau_1(\mathbf{p}_m) \end{cases} \tag{26}$$

On en déduit alors que le vecteur $\rho$ des amplitudes est une fonction du vecteur de position $\mathbf{p}$. Sachant que le vecteur $\varphi$ des incidences sur chacune des stations est aussi une fonction non linéaire de ce vecteur de position on en déduit que le vecteur $\mathbf{u}(\rho, \varphi)$ est aussi à la fréquence $f_i$ la fonction suivante du vecteur de position

$$\mathbf{u}(\boldsymbol{\rho},\boldsymbol{\varphi}) = \mathbf{u}_i(\mathbf{p}) = \mathbf{A}\left(\boldsymbol{\varphi}(\mathbf{p})\right)\boldsymbol{\rho}(f,\mathbf{p}) = \mathbf{A}\left(\boldsymbol{\varphi}(\mathbf{p})\right)\Lambda_i(\mathbf{p}) \times \boldsymbol{\rho} \tag{27}$$

Le critère de type MUSIC de l'équation (23) devient alors la fonction suivante de la position $\mathbf{p}$

$$C_i(\mathbf{p}) = \frac{\mathbf{u}_i^H(\mathbf{p})\mathbf{\Pi}_i\mathbf{u}_i(\mathbf{p})}{\mathbf{u}_i^H(\mathbf{p})\mathbf{u}_i(\mathbf{p})} = \frac{\boldsymbol{\rho}^H\mathbf{Q}_i(\mathbf{p})\boldsymbol{\rho}}{\boldsymbol{\rho}^H\mathbf{Q}(\mathbf{p})\boldsymbol{\rho}}$$

$$\text{avec} \begin{cases} \mathbf{Q}_i(\mathbf{p}) = \Lambda_i(\mathbf{p})^H \mathbf{A}\left(\boldsymbol{\varphi}(\mathbf{p})\right)^H \mathbf{\Pi}_i\mathbf{A}\left(\boldsymbol{\varphi}(\mathbf{p})\right)\Lambda_i(\mathbf{p}) \\ \mathbf{Q}(\mathbf{p}) = \mathbf{A}\left(\boldsymbol{\varphi}(\mathbf{p})\right)^H \mathbf{A}\left(\boldsymbol{\varphi}(\mathbf{p})\right) \end{cases} \tag{28}$$

Sachant qu'en asymptotique $C_i(\mathbf{p}_m) = 0$ on en déduit que $\displaystyle\sum_i C_i(\mathbf{p}_m) = 0$. Il est ainsi possible d'utiliser un critère comme le suivant pour estimer les positions $\mathbf{p}_m$ qui exploite conjointement toutes les fréquences détectées et qui s'annule pour tous les vecteurs de position $\mathbf{p}_m$.

$$C_{totale}(\mathbf{p}) = \sum_i C_i(\mathbf{p}) = \frac{\boldsymbol{\rho}^H\left(\displaystyle\sum_i \mathbf{Q}_i(\mathbf{p})\right)\boldsymbol{\rho}}{\boldsymbol{\rho}^H\mathbf{Q}(\mathbf{p})\boldsymbol{\rho}} \tag{29}$$

En conséquence, en utilisant des propriétés connus de l'algèbre linéaire, on en déduit l'estimateur suivant des positions :

$$\hat{\mathbf{p}}_m = \min_{\mathbf{p}} C_{totale}{}^{opt}(\mathbf{p})$$

$$\text{avec } C_{totale}{}^{opt}(\mathbf{p}) = \frac{\det\left(\sum_i \mathbf{Q}_i(\mathbf{p})\right)}{\det(\mathbf{Q}(\mathbf{p}))} \tag{30}$$

Dans la variante de ci- dessous, on suppose que :

$$\boldsymbol{\rho}_{lm} = \rho_{ml} \times \boldsymbol{\rho}_m \quad \text{avec } \boldsymbol{\rho}_m = \begin{bmatrix} \rho_{1.m} & \cdots & \rho_{K.m} \end{bmatrix}^T \tag{31}$$

où $\rho_{ml}$ est un coefficient qui dépend directement de la densité spectrale de la m- ième source à la fréquence $f_l$. Le modèle de ci- dessus suppose que l'atténuation de la propagation de l'onde entre un émetteur et une station est indépendante de la fréquence. Cette propriété peut alors être utilisée pour améliorer l'estimation des paramètres de localisation $\varphi_m$ de chacune des sources. En conséquence pour estimer les paramètres de localisation $\Phi = \{\varphi_1 \dots \varphi_M\}$, on constitue la matrice de covariance suivante de dimension $NxN$ suivante qui fait une moyenne des matrices $\mathbf{R}_i$ sur toutes les fréquences détectées

$$\mathbf{R}_{globale} = \sum_i \mathbf{R}_i \tag{32}$$

La méthode MUSIC pour estimer les paramètres $\Phi_i = \{\varphi_{1_i}, \dots \varphi_{Mj}\}$ consiste à minimiser le critère suivant :

$$C_{globale}(\boldsymbol{\varphi}, \boldsymbol{\rho}) = \frac{\mathbf{u}^H(\boldsymbol{\rho}, \boldsymbol{\varphi})\boldsymbol{\Pi}_{globale}\mathbf{u}(\boldsymbol{\rho}, \boldsymbol{\varphi})}{\mathbf{u}^H(\boldsymbol{\rho}, \boldsymbol{\varphi})\mathbf{u}(\boldsymbol{\rho}, \boldsymbol{\varphi})} \tag{33}$$

Où la matrice $\Pi_{globale}$ suivante est le projecteur bruit de MUSIC obtenu à partir des éléments propres de $\mathbf{R}_{globale}$. Le critère se réduit alors à la minimisation du critère suivant :

$$C_{globale}{}^{opt}(\boldsymbol{\varphi}) = \frac{\det\left(\mathbf{A}^H(\boldsymbol{\varphi})\boldsymbol{\Pi}_{globale}\mathbf{A}(\boldsymbol{\varphi})\right)}{\det\left(\mathbf{A}^H(\boldsymbol{\varphi})\mathbf{A}(\boldsymbol{\varphi})\right)} \tag{34}$$

où

$$\hat{\boldsymbol{\varphi}}_m = \min_{\boldsymbol{\varphi}}\left(C_{globale}{}^{opt}(\boldsymbol{\varphi})\right) \tag{35}$$

Il est appliqué un algorithme de triangulation par émetteur. Cela consiste à est la position $p_m$ d'un émetteur à partir de son K- uplet d'angle d'incidences $\hat{\varphi}_m$.

Tous les critères d'estimation en fonction du paramètre $\varphi = (\Theta^T_1 \dots \Theta^T_K)^T$ peuvent se réduire au vecteur de position $\mathbf{p} = (x, y, z)^T$ car l'incidence $\Theta_k$ de la source sur la station $k$ est une fonction non linéaire de la position $\mathbf{p} = (x, y, z)^T$ de la source. En conséquence le paramètre $\varphi$ est aussi une fonction non linéaire de $\mathbf{p} = (x, y, z)^T$ car $\varphi_m = \varphi(p_m) = (\Theta^T_1(\mathbf{p}_m) \dots \Theta^T_K(\mathbf{p}_m))^T$. La relation liant les incidences $\Theta_k$ à la position $\mathbf{p} = (x, y, z)^T$ est donnée ci- dessous et est une relation de triangulation connue de l'homme du métier qui permet d'optimiser le critère dans un espace de dimension moindre en paramétrant le problème selon la position des sources

**Optimisation des critères de localisation - mode de fonctionnement**

Les problèmes précédents utilisant une approche de type MUSIC peuvent se résoudre à la recherche des minima de critères qui s'écrivent tous sous la forme :

$$J(\zeta) = \frac{\det\left(\mathbf{T}^H(\zeta)\mathbf{\Pi}_b\mathbf{T}(\zeta)\right)}{\det\left(\mathbf{T}^H(\zeta)\mathbf{T}(\zeta)\right)} \tag{36}$$

A partir d'un point d'initialisation $\zeta_m{}^0$ au voisinage d'une solution $\zeta_m$, un algorithme de descente de type Gauss- Newton connu de l'Homme du métier est obtenu par le procédé itératif suivant : à la *i- ième* itération un couple $\zeta_m{}^i$ est déduit de $\zeta_m{}^{i-1}$ par la relation suivante :

$$\zeta_m{}^i = -\mathbf{H}^{-1}(\zeta_m{}^i)\nabla(\zeta_m{}^i) + \zeta_m{}^{i-1} \tag{37}$$

Où $\mathbf{H}(\zeta)$ et $\nabla(\zeta)$ sont respectivement le Hessien et le gradient du critère $J(\zeta)$ dont les éléments sont donnés ici :

$$\left[\nabla(\zeta)\right]_p = \frac{\det\left(\mathbf{M}(\zeta)\right)}{\det\left(\mathbf{T}^H(\zeta)\mathbf{T}(\zeta)\right)} Tr\left[\mathbf{M}^{-1}(\zeta)\frac{\partial\mathbf{M}(\zeta)}{\partial\zeta_p}\right] \tag{38}$$

$$\left[\mathbf{H}(\zeta)\right]_{pq} = \frac{\det\left(\mathbf{M}(\zeta)\right)}{\det\left(\mathbf{T}^H(\zeta)\mathbf{T}(\zeta)\right)}\left[Tr\left[\mathbf{M}^{-1}(\zeta)\frac{\partial\mathbf{M}(\zeta)}{\partial\zeta_q}\right]Tr\left[\mathbf{M}^{-1}(\zeta)\frac{\partial\mathbf{M}(\zeta)}{\partial\zeta_p}\right]\right.$$
$$-Tr\left[\mathbf{M}^{-1}(\zeta)\frac{\partial\mathbf{M}(\varphi)}{\partial\zeta_p}\mathbf{M}^{-1}(\zeta)\frac{\partial\mathbf{M}(\zeta)}{\partial\zeta_q}\right] \tag{39}$$
$$\left.+Tr\left[\mathbf{M}^{-1}(\zeta)\frac{\partial^2\mathbf{M}(\zeta)}{\partial\zeta_p\partial\zeta_q}\right]\right]$$

Avec $\mathbf{M}(\zeta) = \mathbf{T}^H(\zeta)\mathbf{\Pi}_b\mathbf{T}(\zeta)$ et où $\zeta$ est un vecteur de dimension P dont les éléments sont notés $\zeta_p$ et où $1 \le p, q \le P$

Les points d'initialisations $\zeta_m{}^0$ peuvent être issus d'une estimation séparée des paramètres de localisation sur chacune des stations quand c'est possible. Tous les points $\hat{\zeta}_m$ qui vérifieront $J(\hat{\zeta}_m) < \eta$ ($\eta$ est un seuil proche de 0) seront alors une des solutions de l'optimisation du critère $J(\hat{\zeta}_m)$. La recherche des minima $\{\hat{\zeta}_m, 1 \le m \le M\}$ tel que $J(\hat{\zeta}_m) < \eta$ pourra être conduite par l'une des deux approches :

    **Optimisation n°1 :** Une optimisation directe du critère $J(\varphi)$. On ne retiendra que les minima locaux tel que $J(\hat{\varphi}_m) < \eta$.
    **Optimisation n°2 :** Une optimisation du critère $J(\zeta)$ à partir d'un algorithme de descente de type gauss- Newton initialisé par les paramètres $\{\hat{\zeta}_m, 1 \le m \le M\}$ estimés séparément sur chaque station ou bien par le résultat de l'étape d' **Optimisation n°1**. Cette approche permet d'obtenir un bon compromis entre le coût de calcul et les performances (plus précis) .

**Estimation des angles d'arrivées des émetteurs sur chacune des stations en vue d'une géo-localisation.**

Dans un contexte de propagation difficile (en anglo- saxon « indoor » ou urbain par exemple) on veut estimer les angles d'arrivées sur chacune des stations, sans faire d'hypothèses sur le mode de propagation entre les émetteurs et les stations, mais en exploitant tout de même que les signaux reçus sur les stations proviennent d'un même émetteur. Dans ce cas là, l'angle d'arrivée $\Theta_{k,m}$ de la *m- ième* source sur la *k- ième* station qui s'écrit $\Theta_{k,m} = (\theta_{k,m} \Delta_{k,m})^T$ où est

(comprend l'azimut $\theta_{k,m}$ pour un problème en 2D ou alors l'azimut et l'élévation $\{\theta_{k,m}, \Delta_{k,m}\}$ en 3D) est une fonction non linéaire de la position $\mathbf{p}_m$ de cette source. On cherche alors $\Phi = (\varphi_1 \ldots \varphi_M)^T$ ensemble des directions d'arrivées où $\varphi_m = [\Theta_{1,m}^T \ldots \Theta_{K,m}^T]^T$. Les $\{\varphi_m, 1 \leq m \leq M\}$ sont estimés par la recherche des $M$ minima locaux du critère ((16) ou (25), qui est conduite sur un espace de dimension $K$ pour un problème dans le plan et $2K$ pour un problème dans l'espace, selon les procédures décrites dans la section précédente.

La réponse du $k\text{-}ième$ réseau de capteurs $\mathbf{a}_k(\Theta)$ est obtenue soit par calibration, soit à l'aide du modèle analytique suivant

$$\mathbf{a}_k(\Theta) = \begin{bmatrix} e^{j2\pi \frac{f_0}{c} \mathbf{k}^T(\Theta)\mathbf{r}_{1,K}} \\ \vdots \\ e^{j2\pi \frac{f_0}{c} \mathbf{k}^T(\Theta)\mathbf{r}_{N_K,K}} \end{bmatrix} \qquad (40)$$

Où $\mathbf{r}_{n,K}$ est le vecteur position du $n\text{-}ième$ capteur de la station k dans le référentiel de la station $k$ et où c est la célérité de l'onde.

$\mathbf{k}(\Theta)$ est le vecteur d'onde associé à la direction $\Theta$ tel que :

$$\mathbf{k}(\Theta) = \begin{bmatrix} \cos(\theta)\cos(\Delta) \\ \sin(\theta)\cos(\Delta) \\ \sin(\Delta) \end{bmatrix} \qquad (41)$$

Une fois les estimées $\hat{\varphi}_m = [\hat{\Theta}_{1,m}^T \ldots \hat{\Theta}_{K,m}^T]^T$ ($1 \leq m \leq M$) obtenues, la localisation (ou triangulation) est effectuée selon des algorithmes connus de l'homme de métier comme décrit ci-après.

## Géo-Localisation dans le plan ou l'espace (triangulation)

Dans un contexte où les trajets sont directs on peut directement estimer la position des émetteurs, par le biais de la modélisation décrite ci-après.

Le paramètre d'intérêt est $\varphi$ est une fonction du vecteur position p qui est égal à $[x\ y]^T$ dans le plan et $[x\ y\ z]^T$ dans l'espace, où $x,\ y$ et $z$ sont les coordonnées cartésiennes de l'émetteur dans le plan ou l'espace. Le vecteur paramètre d'intérêt global est donc $\Phi = [\mathbf{p}_1^T \ldots \mathbf{p}_M^T]^T$.

On exploite la relation liant l'angle d'arrivée sur une station à la position de la source dans le plan ou l'espace, ce qui n'est possible qu'en présence de trajets directs (non réfléchis). La réponse des capteurs est obtenue de la manière suivante : $\mathbf{a}_k(\mathbf{p}) = \mathbf{a}_k(\Theta_k(\mathbf{p}))$ $\mathbf{a}_k(\Theta_k(\mathbf{p}))$ est dépendant de $\Theta_k = (\theta_k\ \Delta_k)^T$, la direction d'arrivée de la source sur la station, vue comme une fonction de la position. La réponse des capteurs $\mathbf{a}_k(\Theta(\mathbf{p}))$ peut aussi bien être obtenue par calibration que par son expression analytique obtenue grâce à la relation (40) et grâce aux relations suivantes (42) connu de l'homme du métier lorsque l'on considère une localisation par triangulation dans le plan

$$\begin{cases} \theta_k = \begin{cases} \cos^{-1}\left(\dfrac{x - x_k}{\sqrt{(x-x_k)^2 + (y-y_k)^2}}\right), & y \geq y_k \\ 2\pi - \cos^{-1}\left(\dfrac{(x-x_k)}{\sqrt{(x-x_k)^2 + (y-y_k)^2}}\right), & y < y_k \end{cases} \\ \Delta_k = \tan^{-1}\left(\dfrac{z - z_k}{\sqrt{(x-x_k)^2 + (y-y_k)^2}}\right) \end{cases} \qquad (42)$$

$(x_k,\ y_k,\ z_k)$ est la position de la $k\text{-}ième$ station dans le repère cartésien de référence. L'estimation des paramètres $\mathbf{p}_m$

($1{\le}m{\le}M$) s'effectue par la recherche des $M$ minima locaux du critère ((16) ou (25)) selon un des deux modes d'optimisation proposés en remplaçant φ par φ (**p**).

Dans le cas le plus général où l'incidence d'une source est paramétrée par l'azimut et le site et où la géo- localisation se fait dans l'espace, les principes de triangulation connus de l'Homme du métier sont mis en oeuvre.

**Procédé de géo-localisation d'un ensemble de M sources**

Les $K$- uplets d'angles $\varphi_m = (\Theta_{1.m}, ..., \Theta_{K.m})$ pour $1{\le}m{\le}M$ sont estimés conjointement en minimisant les critères (15) ou (25). L'objectif est d'estimer la position de l'émetteur m à partir de son K- uplets d'angle d'incidence $\varphi_m$. La droite de direction $\Theta_{k,mp}$ passant par la station k  localisée en $S_k$ a pour équation

$$\mathbf{M} = \mathbf{S}_k + \mathbf{k}\left(\Theta_{k,m}\right)\left\|\mathbf{MS}_k\right\| \qquad (43)$$

Où $\mathbf{k}(\Theta)$ est le vecteur d'onde associé à la direction $\Theta$ tel que :

$$\mathbf{k}\left(\Theta_{k,m}\right) = \begin{bmatrix} \cos\left(\theta_{k,m}\right)\cos\left(\Delta_{k,m}\right) \\ \sin\left(\theta_{k,m}\right)\cos\left(\Delta_{k,m}\right) \\ \sin\left(\Delta_{k,m}\right) \end{bmatrix} \qquad (44).$$

Où

$$\Theta_{k,m} = \begin{bmatrix} \theta_{k,m} \\ \Delta_{k,m} \end{bmatrix} \qquad (45).$$

Sachant que $\theta_{k,m}$ et $\Delta_{k,m}$ sont l'azimut et le site de la source de direction $\Theta_{k,m}$. En présence de deux stations localisées en $S_1$ et $S_k$ on peut montrer que les coordonnées du point $E_m$:

$$\mathbf{E}_m = \mathbf{S}_1 + \mathbf{k}\left(\Theta_{1,m}\right)\left\|\mathbf{E}_m\mathbf{S}_1\right\|$$

où

$$\left\|\mathbf{E}_m\mathbf{S}_1\right\| = \frac{\mathbf{k}^H\left(\Theta_{1,m}\right)\mathbf{Q}\left(\Theta_{k,m}\right)\overline{\mathbf{S}_1\mathbf{S}_k}}{\mathbf{k}^H\left(\Theta_{1,m}\right)\mathbf{Q}\left(\Theta_{k,m}\right)\mathbf{k}\left(\Theta_{1,m}\right)} \qquad (46).$$

$$\mathbf{Q}\left(\Theta_{k,m}\right) = \mathbf{I} - \frac{\mathbf{k}\left(\Theta_{k,m}\right)\mathbf{k}^H\left(\Theta_{k,m}\right)}{\mathbf{k}^H\left(\Theta_{k,m}\right)\mathbf{k}\left(\Theta_{k,m}\right)}$$

La valeur 1 correspond à la première station et l'indice k à la k- ième station. L'opérateur $^H$ correspond au transposé conjugué.

Dans la suite du développement on pose :

$$\alpha_m = \Theta_{1,m} \quad \text{et} \quad \beta_m = \Theta_{2,m}$$
$$\Theta_{k,m} = \Theta_k\left(\alpha_m, \beta_m\right) \qquad (47).$$

En utilisant (4), le vecteur d'onde **k** ($\Theta_k$) associé à l'incidence $\Theta_k$ ($\alpha_m$, $\beta_m$) a pour expression :

$$\mathbf{k}\left(\Theta_{k,m}\right) = \frac{\overline{\mathbf{S}_k\mathbf{E}_m}}{\left\|\mathbf{S}_k\mathbf{E}_m\right\|}$$

$$\text{avec} \begin{cases} \overline{\mathbf{S}_k\mathbf{E}_m} = \overline{\mathbf{S}_k\mathbf{S}_1} + \mathbf{k}\left(\alpha_m\right)\left\|\mathbf{E}_m\mathbf{S}_1\right\| \\ \left\|\mathbf{E}_m\mathbf{S}_1\right\| = \dfrac{\mathbf{k}^H\left(\alpha_m\right)\mathbf{Q}\left(\beta_m\right)\overline{\mathbf{S}_1\mathbf{S}_2}}{\mathbf{k}^H\left(\alpha_m\right)\mathbf{Q}\left(\beta_m\right)\mathbf{k}\left(\alpha_m\right)} \end{cases} \qquad (48)$$

L'expression (6) donne alors la relation entre $\Theta_{k,m}$ et ($\alpha_m$, $\beta_m$) . La connaissance des paramètres ($\alpha_m$, $\beta_m$) des trajets directs permettra alors de déduire les coordonnées du point $\mathbf{E}_m$ par la relation (1) .

Dans le cas particulier d'une triangulation dans le plan où les angles $\Theta_{k,m}$ sont des scalaires tel que $\Theta_{1.m} = \alpha_m$, $\Theta_{2,m} = \beta_m$ et où $S_1 = \mathbf{A}$ et $S_k = \mathbf{B}$ , l'expression (4) devient

$$\begin{cases} x_m = x_A + \left\|\mathbf{AE}_m\right\|\cos(\alpha_{m1}) \\ y_m = y_A + \left\|\mathbf{AE}_m\right\|\sin(\alpha_{m1}) \end{cases} \qquad (49).$$

Sachant que ($x_m$, $y_m$) sont les coordonnées de l'émetteur localisé en $\mathbf{E}_m$.

$$\left\|\mathbf{AE}_m\right\| = \frac{\left\|\mathbf{AB}\right\|}{\cos(\alpha_{m1}) - \dfrac{\sin(\alpha_{m1})}{\tan(\beta_{m1})}} \qquad (50)$$

$\|\mathbf{AB}\|$ correspond à la distance entre les points A et B qui est aussi la norme du vecteur $\overline{\mathbf{AB}}$

**Résumé des étapes du procédé de géo-localisation selon l'invention**

**Etape initiale 0 :** Construire l'observation spatio-temporelle y(t) avec L shift temporel à partir de l'observation multi-stations x(t) selon (4)

**Etape 1 :** On estime la matrice de covariance des observations $\hat{\mathbf{R}}_{yy}$ à partir des signaux $\{y(t), t \in [1,T]\}$ selon l'équation (13).

**Etape 2 :** On estime la dimension $D$ de l'espace signal de la matrice $\hat{\mathbf{R}}_{yy}$ à partir d'un test classique sur ses valeurs propres selon une méthode connue de l'Homme du métier, comme par exemple l'algorithme MUSIC.

**Etape 3 :** Connaissant la dimension $D$ de l'espace signal de la matrice $\hat{\mathbf{R}}_{yy}$, on estime son projecteur bruit $\Pi_b$ à l'aide de l'équation (15).

**Variantes de réalisation**

**Etape 4 :** Le contexte impose ensuite de choisir l'une ou l'autre voie : soit estimation directe des positions, soit l'estimation simultanée de tous les angles d'arrivées $\varphi_m$, soit par estimation direct en paramétrant $\varphi_m$ par $\mathbf{p}_m$ comme décrit dans les paragraphes « estimation des angles d'arrivées des émetteurs sur chacune des stations en vue d'une géo-localisation » et « géo-localisation dans le plan ou l'espace ».

**Etape 5 :** Les sources sont enfin localisées selon les modes proposés au paragraphe « estimation du paramètre d'intérêt en vue d'une géolocalisation ». Pour cela on cherche les $M$ minima $\{\hat{\zeta}_m = \{\hat{\varphi}_m$ ou $\hat{\mathbf{p}}_m\}, 1 \leq m \leq M\}$ du critère $J$

($\zeta$) des équations qui vérifient $J(\hat{\zeta}_m) < \eta$. Avec $\eta$ un seuil proche de zéro. Cette optimisation ce fait suivant l'un des modes d'optimisation décrit dans le paragraphe « optimisation des critères de localisation ».

## Revendications

1. Procédé de géolocalisation de $M$ émetteurs Em incidents à un réseau de $K$ stations Sk composées chacune de $N_k$ capteurs élémentaires et des moyens de traitement du signal, **caractérisé en ce qu'**il comporte au moins :

    a) une étape au cours de laquelle, le vecteur d'observation est allongé en intégrant la période $T_e$ d'échantillonnage dans le vecteur d'observation de la manière suivante :

$$\mathbf{y}(t) = \begin{bmatrix} \mathbf{x}(t) \\ \mathbf{x}(t-T_e) \\ \vdots \\ \mathbf{x}(t-LT_e) \end{bmatrix} = \sum_{m=1}^{M}\sum_{l=1}^{L} \mathbf{z}(f_l) \otimes \begin{bmatrix} \rho_{1,lm}\mathbf{a}_1\left(\Theta_{1,m}\right) \\ \rho_{2,lm}\mathbf{a}_2\left(\Theta_{2,m}\right) \\ \vdots \\ \rho_{K,lm}\mathbf{a}_K\left(\Theta_{K,m}\right) \end{bmatrix} s_m(f_l, t-\tau_{1,m}) + \mathbf{n}(t)$$

    où $T_e$ et $\rho_{k,lm}=\rho_{k,m}e^{-j2\pi f_l(\tau_k(p_m)-\tau_1(p_m))}$, est la période d'échantillonnage correspondant à la bande des récepteurs selon le théorème de Shannon, $\mathbf{x}(t) = [\mathbf{x}_1(t) ... \mathbf{x}_K(t)]^T$ correspond à l'expression du signal reçu sur l'ensemble des K stations,
    le signal sur la $k\text{-}ième$ station s'écrit :

$$\mathbf{x}_k(t) = \begin{bmatrix} x_{k,1}(t) \\ x_{k,2}(t) \\ \vdots \\ x_{k,N_k}(t) \end{bmatrix} = \sum_{m=1}^{M} \rho_{k,m}\, \mathbf{a}_k\left(\Theta_{k,m}\right) s_m\left(t-\tau_{k,m}\right) + \mathbf{n}_k(t)$$

    • $x_{k,n}(t)$ est le $t\text{-}ième$ échantillon du signal en sortie du $n\text{-}ième$ capteur de la $k\text{-}ième$ station, échantillonné à la fréquence $F_e = 1/T_e$
    • $s_m(t)$ correspond au $m\text{-}ième$ signal temporel émis par la source à l'instant $t$, en considérant que les signaux des émetteurs sont indépendants entre eux,
    • $\rho_{k,m}$ et $\Theta_{k,m}$ sont respectivement l'amplitude complexe et le vecteur paramètre d'intérêt de la $m\text{-}ième$ source sur la $k\text{-}ième$ station, le vecteur $\Theta_{k,m}$ est la direction d'arrivée sur la station $k$, vue comme une fonction de la position dans le plan ou l'espace,
    • $\tau_{k,m}$ est le temps de parcours entre la $m\text{-}ième$ source et la station $k$,
    • $\mathbf{a}_k(\Theta)$ est la réponse du $k\text{-}ième$ réseau de capteurs à une source bande étroite de fréquence $f_0$ au niveau de la station k qui dépend du paramètre $\Theta$ La porteuse $f_0$ correspond à la fréquence centrale des récepteurs,
    • $n_k(t)$ est le bruit additif présent sur la $k\text{-}ième$ station à l'instant $t$,

    b) une étape d'estimation conjointe des angles d'arrivées ou des positions des émetteurs sur chacune desdites stations exploitant le modèle linéaire suivant :

$$\mathbf{y}(t) = \begin{bmatrix} \mathbf{x}(t) \\ \mathbf{x}(t-T_e) \\ \vdots \\ \mathbf{x}(t-LT_e) \end{bmatrix} = \sum_{m=1}^{M}\sum_{l=1}^{L} \mathbf{z}(f_l) \otimes \begin{bmatrix} \rho_{1,lm}\mathbf{a}_1\left(\Theta_{1,m}\right) \\ \rho_{2,lm}\mathbf{a}_2\left(\Theta_{2,m}\right) \\ \vdots \\ \rho_{K,lm}\mathbf{a}_K\left(\Theta_{K,m}\right) \end{bmatrix} s_m(f_l, t-\tau_{1,m}) + \mathbf{n}(t)$$

avec $\rho_{k,lm} = \rho_{k,m} e^{-j2\pi f_l(\tau_k(p_m) - \tau_l(p_m))}$, en vue d'une géo- localisation ou une étape de géo- localisation directe par estimation conjointe des coordonnées des émetteurs dans le plan ou dans l'espace, $s_m(f_l, t)$ correspond au signal d'un filtre de bande 1/LTe centré autour de la fréquence fl où m correspond à la *m- ième* source,

c) une étape de géo-localisation des sources à partir du K-uplets d'incidence lorsqu'il est effectué une estimation conjointe des angles.

2. Procédé de géo-localisation selon la revendication 1 **caractérisé en ce qu'**il comporte à l'ordre 2 les étapes supplémentaires suivantes :

une étape d'estimation de la matrice de covariance des observations à partir des signaux x(t) où t appartient à l'intervalle {1, T}

$$\hat{\mathbf{R}}_{yy} = \frac{1}{T} \sum_{i=1}^{T} \mathbf{y}(i \times T_e) \mathbf{y}^H (i \times T_e)$$

où $(.)^H$ désigne la transposée conjuguée, les signaux $s_m(t)$ sont approximés par une somme finie de $Q_m \leq L$ sources (ou composantes) bande étroite pour l'ensemble du réseau,

une étape d'estimation de la dimension D de l'espace signal de la matrice de covariance $\hat{\mathbf{R}}_{yy}$ en utilisant une méthode de détection du nombre de sources par un procédé connu de l'homme du métier à partir des valeurs propres de cette matrice de covariance,

une étape de type MUSIC d'estimation de la matrice $\Pi_b$ du projecteur bruit obtenu à partir des éléments propres de $\mathbf{R}_{yy}$,

$$\Pi_b = \mathbf{I}_{NL} - \mathbf{E}_S \mathbf{E}_S^H$$

où $\mathbf{E}_s = [\mathbf{u}_1 \, \mathbf{u}_2 \, ... \, \mathbf{u}_D]$ est l'espace signal tel que $\mathbf{u}_d$ est le vecteur propre associé à la *d-ième* plus grande valeur propre de l'estimé $\hat{\mathbf{R}}_{yy}$ de la matrice de covariance de l'observation $\mathbf{y}(t)$ sachant que le rang de $\hat{\mathbf{R}}_{yy}$ - $\hat{\mathbf{R}}_{nn}$ vaut $D$, l'entier $D$ correspondant alors au nombre de composantes bande étroites de réponse

$$\mathbf{b}(f_l, \rho_m, \varphi_m) = \mathbf{z}(f_l) \otimes \mathbf{u}(\rho_{lm}, \varphi_m) \text{ avec } \mathbf{u}(\rho_{lm}, \varphi_m) = \begin{bmatrix} \rho_{1,lm} \mathbf{a}_1(\Theta_{1,m}) \\ \rho_{2,lm} \mathbf{a}_2(\Theta_{2,m}) \\ \vdots \\ \rho_{K,lm} \mathbf{a}_K(\Theta_{K,m}) \end{bmatrix}$$

observées par le vecteur $\mathbf{y}(t)$.

3. Procédé selon la revendication 1 **caractérisé en ce qu'**il comporte pour l'estimation conjointe des angles d'arrivées des émetteurs sur chacune des stations en vue d'une géo- localisation les étapes suivantes :

une exploitation de l'ensemble des signaux reçus par les stations de manière simultanée, en considérant que l'angle d'arrivée $\Theta_{k,m}$ de la *m- ième* source sur la *k- ième* station, comprenant l'azimut $\theta_{k,m}$ pour un problème en 2D ou alors l'azimut et l'élévation $\{\theta_{k,m}, \Delta_{k,m}\}$ en 3D $\Theta_{k,m} = (\theta_{k,m} \, \Delta_{k,m})^T$ est une fonction de la position $\mathbf{p}_m$ de la source, puis une étape de détermination de $\Phi = (\varphi_1 \, ... \, \varphi_M)^T$ ensemble des directions d'arrivées où $\varphi_m = [\Theta_{1,m}^T \, ... \, \Theta_{K,m}^T]^T$

les valeurs $\{\varphi_m, 1 \leq m \leq M\}$ sont estimées par la recherche des $M$ minima locaux du critère conduite sur un espace de dimension $K$ pour un problème dans le plan et $2K$ pour un problème dans l'espace,

la réponse du *k-ième* réseau de capteurs $\mathbf{a}_k(\Theta)$ est obtenue soit par calibration, soit à l'aide du modèle analytique suivant :

$$\mathbf{a}_k(\mathbf{\Theta}) = \begin{bmatrix} e^{j2\pi\frac{f_0}{c}\mathbf{k}^T(\mathbf{\Theta})\mathbf{r}_{1,K}} \\ \vdots \\ e^{j2\pi\frac{f_0}{c}\mathbf{k}^T(\mathbf{\Theta})\mathbf{r}_{N_K,K}} \end{bmatrix}$$

où $\mathbf{r}_{n,K}$ est le vecteur position du *n-ième* capteur de la station $k$ dans le référentiel de la station $k$ et où $c$ est la célérité de l'onde,
$\mathbf{k}(\Theta)$ est le vecteur d'onde associé à la direction $\Theta$ tel que :

$$\mathbf{k}(\mathbf{\Theta}) = \begin{bmatrix} \cos(\theta)\cos(\Delta) \\ \sin(\theta)\cos(\Delta) \\ \sin(\Delta) \end{bmatrix}$$

une fois les estimées $\hat{\varphi}_m = [\Theta_{1,m}^T \ldots \hat{\Theta}_{K,m}^T]^T$ ($1 \leq m \leq M$) obtenues, exécuter un algorithme de localisation.

4. Procédé selon la revendication 1 **caractérisé en ce que** l'étape de géolocalisation dans le plan ou dans l'espace est exécutée de la manière suivante :

le paramètre d'intérêt étant $\varphi = \mathbf{p}$ où $\mathbf{p}$ est le vecteur position dans l'espace qui est égal à $[x\ y]^T$ dans le plan ou $[x\ y\ z]^T$ dans l'espace, où $x, y$ et $z$ sont les coordonnées cartésiennes dans le plan ou l'espace,
soit le vecteur paramètre d'intérêt global $\Phi = [\mathbf{p}_1^T \ldots \mathbf{p}_M^T]^T$, le procédé comporte les étapes suivantes :

exploiter la relation liant l'angle d'arrivée sur une station à la position de la source dans le plan ou l'espace, déterminer la réponse des capteurs : $\mathbf{a}_k(\mathbf{p}) = \mathbf{a}_k(\Theta(\mathbf{p}))$. $\mathbf{a}_k(\Theta_k(\mathbf{p}))$ dépend de $\Theta_k = (\theta_k\ \Delta_k)^T$, direction d'arrivée de la source sur la station, vue comme une fonction de la position.

5. Procédé selon la revendication 4 **caractérisé en ce que** la réponse des capteurs $\mathbf{a}_k(\Theta(\mathbf{p}))$ est obtenue en utilisant la relation suivante :

$$\begin{cases} \theta_k = \begin{cases} \cos^{-1}\left(\dfrac{x - x_k}{\sqrt{(x - x_k)^2 + (y - y_k)^2}}\right), y \geq y_k \\ 2\pi - \cos^{-1}\left(\dfrac{(x - x_k)}{\sqrt{(x - x_k)^2 + (y - y_k)^2}}\right), y < y_k \end{cases} \\ \Delta_k = \tan^{-1}\left(\dfrac{z - z_k}{\sqrt{(x - x_k)^2 + (y - y_k)^2}}\right) \end{cases}$$

$(x_k, y_k, z_k)$ est la position de la *k-ième* station dans le repère cartésien de référence,
estimer les paramètres $\mathbf{p}_m$ ($1 \leq m \leq M$) en recherchant les $M$ minima locaux du critère

6. Procédé selon la revendication 1 **caractérisé en ce que** l'étape de localisation des sources comporte une étape d'estimation des paramètres de localisation comprenant la recherche des minima de critères qui s'écrivent tous sous la forme :

$$J(\zeta) = \frac{\det\left(\mathbf{T}^H(\zeta)\,\mathbf{\Pi}_b\mathbf{T}(\zeta)\right)}{\det\left(\mathbf{T}^H(\zeta)\,\mathbf{T}(\zeta)\right)}$$

à partir d'un point d'initialisation $\zeta_m{}^0$ au voisinage d'une solution $\zeta_m$, un algorithme de descente de type Gauss-Newton connu de l'Homme du métier est obtenu par le procédé itératif suivant : à la *i- ième* itération un couple $\zeta_m{}^i$ est déduit de $\zeta_m{}^{i-1}$ par la relation suivante :

$$\zeta_m{}^i = -\mathbf{H}^{-1}(\zeta_m{}^i)\nabla(\zeta_m{}^i) + \zeta_m{}^{i-1}$$

où $\mathbf{H}(\zeta)$ et $\nabla(\zeta)$ sont respectivement le Hessien et le gradient du critère $J(\zeta)$ dont les éléments sont donnés ici :

$$\left[\nabla(\zeta)\right]_p = \frac{\det(\mathbf{M}(\zeta))}{\det\left(\mathbf{T}^H(\zeta)\,\mathbf{T}(\zeta)\right)} Tr\left[\mathbf{M}^{-1}(\zeta)\frac{\partial\mathbf{M}(\zeta)}{\partial\zeta_p}\right]$$

$$\begin{aligned}
\left[\mathbf{H}(\zeta)\right]_{pq} = {} & \frac{\det(\mathbf{M}(\zeta))}{\det\left(\mathbf{T}^H(\zeta)\,\mathbf{T}(\zeta)\right)}\left[Tr\left[\mathbf{M}^{-1}(\zeta)\frac{\partial\mathbf{M}(\zeta)}{\partial\zeta_q}\right]Tr\left[\mathbf{M}^{-1}(\zeta)\frac{\partial\mathbf{M}(\zeta)}{\partial\zeta_p}\right]\right. \\
& -Tr\left[\mathbf{M}^{-1}(\zeta)\frac{\partial\mathbf{M}(\varphi)}{\partial\zeta_p}\mathbf{M}^{-1}(\zeta)\frac{\partial\mathbf{M}(\zeta)}{\partial\zeta_q}\right] \\
& \left. +Tr\left[\mathbf{M}^{-1}(\zeta)\frac{\partial^2\mathbf{M}(\zeta)}{\partial\zeta_p\partial\zeta_q}\right]\right]
\end{aligned}$$

avec $\mathbf{M}(\zeta) = \mathbf{T}^H(\zeta)\,\mathbf{\Pi}_b\mathbf{T}(\zeta)$ et où $\zeta$ est un vecteur de dimension $P$ dont les éléments sont notés $\zeta_p$ et où $1 \leq p,\ q \leq P$.

**7.** Procédé selon la revendication 6 **caractérisé en ce que** les points d'initialisations $\zeta_m{}^0$ sont issus d'une estimation indépendante obtenue sur chaque station et **en ce que** la recherche des minima $\{\hat{\zeta}_m,\ 1 \leq m \leq M\}$ tel que $J(\hat{\zeta}_m) < \eta$ comporte au moins une étape d'optimisation directe du critère $J(\varphi)$.

**8.** Procédé selon la revendication 6 ou 7 **caractérisé en ce que** les points d'initialisations $\zeta_m{}^0$ sont issus d'une estimation indépendante obtenue sur chaque station et **en ce que** la recherche des minima $\{\hat{\zeta}_m,\ 1 \leq m \leq M\}$ tel que $J(\hat{\zeta}_m) < \eta$ comporte au moins : une étape d'optimisation du critère $J(\zeta)$ à partir d'un algorithme de descente de type gauss-Newton initialisé par les paramètres $\{\hat{\zeta}_m,\ 1 \leq m \leq M\}$ estimés séparément sur chaque station ou bien par le résultat de l'étape d'optimisation de la revendication 7.

**9.** Procédé selon la revendication 1 **caractérisé en ce que** l'étape d'estimation des paramètres de localisation $\Phi_i = \{\varphi_{1_i}\,\ldots\,\varphi_{M_i}\}$, comprend les étapes suivantes :

constituer une matrice de covariance suivante de dimension $N{\times}N$ qui fait une moyenne des matrices sur toutes les fréquences détectées

$$\mathbf{R}_i = \sum_{j=1}^{M_i} \mathbf{v}_j{}^i\left(\mathbf{v}_j{}^i\right)^H$$

avec N le nombre de capteurs total
minimiser le critère suivant :

$$C_i\left(\varphi,\rho\right)=\frac{\mathbf{u}^H(\rho,\varphi)\mathbf{\Pi}_i\mathbf{u}(\rho,\varphi)}{\mathbf{u}^H(\rho,\varphi)\mathbf{u}(\rho,\varphi)}$$

où la matrice $\Pi_i$ suivante est le projecteur bruit de MUSIC obtenu à partir des éléments propres de $\mathbf{R}_i$ (Les $N$-$M_i$ plus faible valeur propres de la matrice), et sachant que

$$\mathbf{u}(\rho,\varphi)=\mathbf{A}\left(\varphi\right)\rho \ \text{ avec } \mathbf{A}\left(\varphi\right)=diag\left(\mathbf{a}_1(\mathbf{\Theta}_1) \quad \dots \quad \mathbf{a}_K\left(\mathbf{\Theta}_K\right)\right)$$

qui se réduit à la minimisation du critère suivant

$$C_i^{\,opt}\left(\varphi\right)=\frac{\det\left(\mathbf{A}^H(\varphi)\mathbf{\Pi}_i\mathbf{A}(\varphi)\right)}{\det\left(\mathbf{A}^H(\varphi)\mathbf{A}(\varphi)\right)}$$

déterminer les $M_i$ minima du critère $C_i^{opt}(\varphi)$ qui sont les paramètres de localisations $\varphi_{m_i}$.

10. Procédé de géo-localisation selon la revendication 1 **caractérisé en ce qu'**il comporte à l'ordre 2 les étapes supplémentaires suivantes :

une étape d'estimation de la matrice de covariance des observations à partir des signaux x(t) où t appartient à l'intervalle {1, T}

$$\hat{\mathbf{R}}_{yy}=\frac{1}{T}\sum_{i=1}^{T}\mathbf{y}\left(i\times T_e\right)\mathbf{y}^H\left(i\times T_e\right)$$

où sachant que l'observation $\mathbf{y}(t)$ se modélise suivant un nombre fini de composantes de réponse

$$\mathbf{b}\left(f_l,\rho_{lm},\varphi_m\right)=\mathbf{z}(f_l)\otimes\mathbf{u}(\rho_{lm},\varphi_m) \ \text{ avec } \mathbf{u}(\rho_{lm},\varphi_m)=\begin{bmatrix}\rho_{1,lm}\mathbf{a}_1\left(\mathbf{\Theta}_{1,m}\right)\\ \rho_{2,lm}\mathbf{a}_2\left(\mathbf{\Theta}_{2,m}\right)\\ \vdots\\ \rho_{K,lm}\mathbf{a}_K\left(\mathbf{\Theta}_{K,m}\right)\end{bmatrix}.$$

qu'il existe une estimation conjointe des paramètres $(f_l,\ \rho_{lm},\ \varphi_m)$ par une méthode de type haute résolution connu de l'homme du métier exploitant les statistiques d'ordre 2 contenu dans $\hat{\mathbf{R}}_{yy}$ et la réponse vectorielle $\mathbf{b}$ $(f,\rho,\varphi)$ d'une composante.

11. Procédé de géo- localisation selon la revendication 1 **caractérisé en ce qu'**il existe une étape d'estimation conjointe des paramètres $(f_l,\ \rho_{lm},\ \varphi_m)$ exploitation des statistiques d'ordre 2q de l'observation $\mathbf{y}(t)$ et utilisant la réponse $\mathbf{b}$ $(f, \rho, \varphi)$ d'une composante.

12. Procédé de géo- localisation selon la revendication 10 et 11 **caractérisé en ce qu'**il comporte une étape de re-paramétrisation de $\varphi_m$ par $\varphi\left(\mathbf{p}_m\right)$ conduisant à l'estimation conjointe des $(f_l, \rho_{lm}, \mathbf{p}_m)$ en utilisant la réponse vectorielle $\mathbf{b}$ $(f, \rho, \varphi\left(\mathbf{p}\right))$ d'une des composantes spatio- fréquentielle.

**13.** Procédé de géo- localisation selon la revendication 1 **caractérisé en ce qu'**il comporte une sous variante d'estimation des positions des émetteurs comprenant au moins les étapes suivantes

étant donné $\rho_{k,im} = \rho_{k,m} \exp\left(j2\pi f_i\left(\tau\left(\mathbf{p}_m\right) - \tau_1\left(\mathbf{p}_m\right)\right)\right)$ et donc que

$$\boldsymbol{\rho}_{im} = \Lambda_i\left(\mathbf{p}_m\right) \times \boldsymbol{\rho}_m$$

$$\text{avec} \begin{cases} \boldsymbol{\rho}_m = \begin{bmatrix} \rho_{1,m} & \cdots & \rho_{K,m} \end{bmatrix}^T \\ \Lambda_i\left(\mathbf{p}_m\right) = diag\left\{\exp\left(-j2\pi f_i\Delta\tau_1(\mathbf{p}_m)\right) \quad \cdots \quad \exp\left(-j2\pi f_i\Delta\tau_K(\mathbf{p}_m)\right)\right\} \\ \Delta\tau_k(\mathbf{p}_m) = \tau_k\left(\mathbf{p}_m\right) - \tau_1\left(\mathbf{p}_m\right) \end{cases}$$

le vecteur $\rho$ des amplitudes est une fonction du vecteur de position $\mathbf{p}$, sachant que le vecteur $\varphi$ des incidences sur chacune des stations est aussi une fonction non linéaire de ce vecteur de position, le vecteur $\mathbf{u}$ $(\rho, \varphi)$ est aussi à la fréquence $f_i$

en utilisant des propriétés connus de l'algèbre linéaire, on en déduit l'estimateur suivant des positions :

$$\hat{\mathbf{p}}_m = \min_{\mathbf{p}} C_{totale}^{opt}\left(\mathbf{p}\right)$$

$$\text{avec } C_{totale}^{opt}\left(\mathbf{p}\right) = \frac{\det\left(\sum_i \mathbf{Q}_i\left(\mathbf{p}\right)\right)}{\det\left(\mathbf{Q}(\mathbf{p})\right)}$$

**Patentansprüche**

**1.** Verfahren zum Bestimmen der Positionen von M Sender Em inzidierend zu einem Netzwerk von $K$ Stationen Sk, die jeweils aus $N_k$ Elementarsensoren und Signalverarbeitungsmitteln bestehen, **dadurch gekennzeichnet, dass** es wenigstens Folgendes beinhaltet:

a) einen Schritt, bei dem der Beobachtungsvektor durch Integrieren der Abtastperiode $T_e$ in dem Beobachtungsvektor wie folgt erweitert wird:

$$\mathbf{y}(t) = \begin{bmatrix} \mathbf{x}(t) \\ \mathbf{x}(t-T_e) \\ \vdots \\ \mathbf{x}(t-LT_e) \end{bmatrix} = \sum_{m=1}^{M}\sum_{l=1}^{L} \mathbf{z}(f_l) \otimes \begin{bmatrix} \rho_{1,lm}\mathbf{a}_1\left(\Theta_{1,m}\right) \\ \rho_{2,lm}\mathbf{a}_2\left(\Theta_{2,m}\right) \\ \vdots \\ \rho_{K,lm}\mathbf{a}_K\left(\Theta_{K,m}\right) \end{bmatrix} s_m\left(f_l, t-\tau_{1,m}\right) + \mathbf{n}(t)$$

wobei $T_e$ und $\rho_{k,lm} = \rho_{k,m}e^{-j2\pi f_l(\tau_k(\mathbf{p}_m)-\tau_1(\mathbf{p}_m))}$ die Abtastperiode ist, die dem Band der Empfänger gemäß dem Shannon- Theorem $\mathbf{x}$ (t) = [$\mathbf{x}$1 (t) ...$\mathbf{x}_k$ (t) ]$^T$ entspricht, entsprechend dem Ausdruck des an dem Satz von K Stationen empfangenen Signals,

wobei das Signal an der $k^{ten}$ Station ausgedrückt wird als:

$$\mathbf{x}_k(t) = \begin{bmatrix} x_{k,1}(t) \\ x_{k,2}(t) \\ \vdots \\ x_{k,N_k}(t) \end{bmatrix} = \sum_{m=1}^{M} \rho_{k,m} \, \mathbf{a}_k\left(\Theta_{k,m}\right) s_m\left(t - \tau_{k,m}\right) + \mathbf{n}_k(t)$$

- $x_{k,n}(t)$ ist das $t^{te}$ Sample des Signals vom $n^{ten}$ Sensor der $k^{ten}$ Station, abgetastet mit der Frequenz $F_e = 1/T_e$;
- $s_m(t)$ entspricht dem $m^{ten}$ Zeitsignal, das von der Quelle zum Zeitpunkt t gesendet wird, unter Berücksichtigung, dass die Signale der Sender voneinander unabhängig sind;
- $\rho_{k,m}$ und $\Theta_{k,m}$ sind jeweils die komplexe Amplitude und der Vektorparameter von Interesse der $m^{ten}$ Quelle an der $k^{ten}$ Station, der Vektor $\Theta_{k,m}$ ist die Ankunftsrichtung an der Station $k$, gesehen als eine Funktion von der Position in der Ebene oder im Raum;
- $\tau_{k,m}$ ist die Laufzeit zwischen der $m^{ten}$ Quelle und der Station k;
- $\mathbf{a}_k(\Theta)$ ist die Antwort des $k^{ten}$ Sensornetzes auf eine Schmalbandquelle von Frequenz $f_0$ an der Station k, die vom Parameter $\Theta$ abhängig ist, wobei der Träger $f_0$ der Mittenfrequenz der Empfänger entspricht;
- $\mathbf{n}_k(t)$ ist das additive Rauschen an der $k^{ten}$ Station zum Zeitpunkt t;

b) einen Schritt des gemeinsamen Schätzens der Ankunftswinkel oder der Positionen der Sender an jeder der Stationen mit Hilfe des folgenden linearen Modells:

$$\mathbf{y}(t) = \begin{bmatrix} \mathbf{x}(t) \\ \mathbf{x}(t - T_e) \\ \vdots \\ \mathbf{x}(t - LT_e) \end{bmatrix} = \sum_{m=1}^{M} \sum_{l=1}^{L} \mathbf{z}(f_l) \otimes \begin{bmatrix} \rho_{1,lm}\mathbf{a}_1\left(\Theta_{1,m}\right) \\ \rho_{2,lm}\mathbf{a}_2\left(\Theta_{2,m}\right) \\ \vdots \\ \rho_{K,lm}\mathbf{a}_K\left(\Theta_{K,m}\right) \end{bmatrix} s_m\left(f_l, t - \tau_{1,m}\right) + \mathbf{n}(t)$$

mit $\rho_{k,lm} = \rho_{k,m}e^{-j2\pi f_l(\tau_k(\mathbf{p}_m)-\tau_1(\mathbf{p}_m))}$, im Hinblick auf eine Positionsbestimmung oder einen direkten Positionsbestimmungsschritt durch gemeinsames Schätzen von Koordinaten der Sender in der Ebene oder im Raum, $s_m(f_l, t)$ entspricht dem Signal eines Filters im Band 1/Lte, um die Frequenz fl herum zentriert, wobei m der $m^{ten}$ Quelle entspricht;

c) einen Schritt des Positionsbestimmens von Quellen auf der Basis von K Inzidenztupeln, wenn eine gemeinsame Schätzung der Winkel durchgeführt wird.

2. Positionsbestimmungsverfahren nach Anspruch 1, **dadurch gekennzeichnet, dass** es in der zweiten Ordnung die folgenden zusätzlichen Schritte beinhaltet:

einen Schritt des Schätzens der Kovarianzmatrix der Beobachtungen auf der Basis der Signale x(t), wobei t zum Intervall {1, T} gehört:

$$\hat{\mathbf{R}}_{yy} = \frac{1}{T} \sum_{i=1}^{T} \mathbf{y}\left(i \times T_e\right) \mathbf{y}^H\left(i \times T_e\right)$$

wobei $(.)^H$ die konjugierte Transposition bezeichnet, die Signale $s_m(t)$ durch eine finite Summe von $Q_m \leq L$ Schmalbandquellen (oder Komponenten) für das gesamte Netz approximiert werden;
einen Schritt des Schätzens der Dimension D des Signalraums der Kovarianzmatrix $\hat{\mathbf{R}}_{yy}$ mittels eines Verfahrens zum Detektieren der Anzahl von Quellen mit einer der Fachperson bekannten Methode auf der Basis der Eigenwerte dieser Kovarianzmatrix;
einen Schritt des Schätzens, vom MUSIC-Typ, der Matrix $\Pi_b$ des Rauschprojektors, erhalten auf der Basis der eigenen Elemente von $\mathbf{R}yy$

$$\mathbf{\Pi}_b = \mathbf{I}_{NL} - \mathrm{E}_S \mathrm{E}_S^{H}$$

wobei $\mathrm{E}_S = [\mathbf{u}_1 \, \mathbf{u}_2 \, ... \, \mathbf{u}_D]$ der Signalraum ist, so dass $\mathbf{u}_d$ der eigene Vektor ist, der mit dem $d^{ten}$-größten Eigenwert der Schätzung $\hat{\mathbf{R}}_{yy}$ der Kovarianzmatrix der Beobachtung $\mathbf{y}(t)$ assoziiert ist, in dem Wissen, dass der Rang von $\hat{\mathbf{R}}_{yy}$-$\hat{\mathbf{R}}_{nn}$ gleich $D$ ist, wobei die ganze Zahl $D$ dann der Anzahl von Schmalband-Antwortkomponenten entspricht:

$$\mathbf{b}(f_l, \boldsymbol{\rho}_m, \boldsymbol{\varphi}_m) = z(f_l) \otimes \mathbf{u}(\boldsymbol{\rho}_{lm}, \boldsymbol{\varphi}_m), \text{ mit } \mathbf{u}(\boldsymbol{\rho}_{lm}, \boldsymbol{\varphi}_m) = \begin{bmatrix} \rho_{1,lm}\mathbf{a}_1\left(\boldsymbol{\Theta}_{1,m}\right) \\ \rho_{2,lm}\mathbf{a}_2\left(\boldsymbol{\Theta}_{2,m}\right) \\ \vdots \\ \rho_{K,lm}\mathbf{a}_K\left(\boldsymbol{\Theta}_{K,m}\right) \end{bmatrix}$$

beobachtet durch den Vektor $\mathbf{y}(t)$.

3.  Verfahren nach Anspruch 1, **dadurch gekennzeichnet, dass** es die folgenden Schritte zum gemeinsamen Schätzen der Ankunftswinkel der Sender an jeder der Stationen im Hinblick auf eine Positionsbestimmung beinhaltet:

gleichzeitiges Benutzen aller von den Stationen empfangenen Signale unter Berücksichtigung dessen, dass der Ankunftswinkel $\Theta_{k,m}$ der $m^{ten}$ Quelle an der $k^{ten}$ Station, umfassend den Azimut $\theta_{k,m}$ für ein 2D- Problem oder Azimut und Elevation $\{\theta_{k,m}, \, \Delta_{k,m}\}$ in 3D $\Theta_{k,m} = (\theta_{k,m}, \, \Delta_{k,m})^\mathsf{T}$ eine Funktion ist der Position $\mathbf{p}_m$ der Quelle, dann einen Schritt des gemeinsamen Ermittelns des Satzes $\Phi = (\varphi_1 \, ... \, \varphi_M)^\mathsf{T}$ von Ankunftsrichtungen, wobei $\varphi_M = \{\Theta_{l,m}^{\,T} \, ... \, \hat{\Theta}_{K,m}^{\,T}]^{\,T}$;
die Werte $\{\hat{\varphi}_m, 1 \leq m \leq M\}$ werden durch die Suche nach den $M$ lokalen Minima des Kriteriums geschätzt, durchgeführt an einem Raum von Dimension $K$ für ein Problem in der Ebene und $2K$ für ein Problem im Raum;
die Antwort des $k^{ten}$ Sensornetzes $\mathbf{a}_k(\Theta)$ wird entweder durch Kalibration oder mittels des folgenden analytischen Modells erhalten:

$$\mathbf{a}_k\left(\boldsymbol{\Theta}\right) = \begin{bmatrix} e^{\,j2\pi\frac{f_0}{c}\mathbf{k}^T\left(\boldsymbol{\Theta}\right)\mathbf{r}_{1,K}} \\ \vdots \\ e^{\,j2\pi\frac{f_0}{c}\mathbf{k}^T\left(\boldsymbol{\Theta}\right)\mathbf{r}_{N_K,K}} \end{bmatrix}$$

wobei $\mathbf{r}_{n,K}$ der Positionsvektor des $n^{ten}$ Sensors der Station $k$ im Bezugssystem von Station $k$ ist und wobei $c$ die Wellengeschwindigkeit ist;
$\mathbf{k}(\Theta)$ der mit der Richtung $\Theta$ assoziierte Wellenvektor ist, so dass:

$$\mathbf{k}\left(\boldsymbol{\Theta}\right) = \begin{bmatrix} \cos\left(\theta\right)\cos\left(\Delta\right) \\ \sin\left(\theta\right)\cos\left(\Delta\right) \\ \sin\left(\Delta\right) \end{bmatrix}$$

nach dem Erhalt der Schätzungen $\hat{\varphi}_m = [\hat{\Theta}_{l,m}^{\,T} \, ... \, \hat{\Theta}_{k,m}^{\,T}]^{\,T}$ $(1 \leq m \leq M)$, Ausführen eines Positionsbestimmungsalgorithmus.

4.  Verfahren nach Anspruch 1, **dadurch gekennzeichnet, dass** der Positionsbestimmungsschritt in der Ebene oder im Raum wie folgt ausgeführt wird:

wenn der Parameter von Interesse $\varphi = \mathbf{p}$ ist, wobei $\mathbf{p}$ der Positionsvektor im Raum ist, der gleich $[x \, y]^\mathsf{T}$ in der

Ebene oder $[x\ y\ z]^T$ im Raum ist, wobei $x,\ y$ und $z$ die kartesischen Koordinaten in der Ebene oder im Raum sind, dann sei der globale Vektorparameter von Interesse $\Phi = [\mathbf{p}_1^{\ T}\ ..,\ \mathbf{p}_M^{\ T}]^T$, wobei das Verfahren die folgenden Schritte beinhaltet:

Benutzen der Relation, die den Ankunftswinkel an einer Station mit der Position der Quelle in der Ebene oder im Raum verknüpft;
Ermitteln der Antwort der Sensoren: $\mathbf{a}_k\ (\mathbf{p}) =a_k\ (\Theta\ (\mathbf{p})\ .\mathbf{a}_k\ (\Theta_k\ (\mathbf{p})\ )$ hängt von $\Theta_k = (\theta_k\ \Delta_k)^{\ T}$ ab, der An-kunftsrichtung der Quelle an der Station, gesehen als eine Funktion von der Position.

5.  Verfahren nach Anspruch 4, **dadurch gekennzeichnet, dass** die Antwort der Sensoren $\mathbf{a}_k(\Theta(\mathbf{p}))$ mit der folgenden Relation erhalten wird:

$$\begin{cases} \boldsymbol{\theta}_k = \begin{cases} \cos^{-1}\left(\dfrac{x-x_k}{\sqrt{(x-x_k)^2+(y-y_k)^2}}\right), y \geq y_k \\[3mm] 2\pi - \cos^{-1}\left(\dfrac{(x-x_k)}{\sqrt{(x-x_k)^2+(y-y_k)^2}}\right), y < y_k \end{cases} \\[8mm] \Delta_k = \tan^{-1}\left(\dfrac{z-z_k}{\sqrt{(x-x_k)^2+(y-y_k)^2}}\right) \end{cases}$$

$(x_k,y_k,z_k)$ ist die Position der $k^{ten}$ Station in der kartesischen Referenzmarkierung;
Schätzen der Parameter $\mathbf{p}_m$ ($1{\leq}m{\leq}M$) durch Suchen nach den lokalen Minima $M$ des Kriteriums.

6.  Verfahren nach Anspruch 1, **dadurch gekennzeichnet, dass** der Schritt des Bestimmens der Position von Quellen einen Schritt des Schätzens von Ortsparametern beinhaltet, der das Suchen nach den Kriterienminima beinhaltet, die alle in der folgenden Form ausgedrückt werden:

$$J(\zeta) = \frac{\det\left(\mathbf{T}^H(\zeta)\mathbf{\Pi}_b\mathbf{T}(\zeta)\right)}{\det\left(\mathbf{T}^H(\zeta)\mathbf{T}(\zeta)\right)}$$

auf der Basis eines Initialisierungspunkts $\zeta_m^{\ 0}$ in der Nähe einer Lösung $\zeta_m$, ein der Fachperson bekannter Ableitungsalgorithmus des Gauss-Newton-Typs wird mit der folgenden iterativen Methode erhalten: nach der $i^{ten}$ Iteration wird ein Paar $\zeta_m^{\ i}$ von $S_m^{\ i\text{-}l}$ mit folgenden Relation abgeleitet:

$$\zeta_m^{\ i} = -\mathbf{H}^{-1}(\zeta_m^{\ i})\nabla(\zeta_m^{\ i}) + \zeta_m^{\ i-1}$$

wobei $\mathbf{H}(\zeta)$ und $\nabla(\zeta)$ jeweils die Hesse-Matrix und der Gradient des Kriteriums $J(\zeta)$ sind, deren Elemente nachfolgend angegeben sind:

$$[\nabla(\zeta)]_p = \frac{\det(\mathbf{M}(\zeta))}{\det\left(\mathbf{T}^H(\zeta)\mathbf{T}(\zeta)\right)} Tr\left[\mathbf{M}^{-1}(\zeta)\frac{\partial\mathbf{M}(\zeta)}{\partial\zeta_p}\right]$$

$$\left[\mathbf{H}(\zeta)\right]_{pq} = \frac{\det\left(\mathbf{M}(\zeta)\right)}{\det\left(\mathbf{T}^H(\zeta)\mathbf{T}(\zeta)\right)}\left[Tr\left[\mathbf{M}^{-1}(\zeta)\frac{\partial\mathbf{M}(\zeta)}{\partial\zeta_q}\right]Tr\left[\mathbf{M}^{-1}(\zeta)\frac{\partial\mathbf{M}(\zeta)}{\partial\zeta_p}\right]\right.$$

$$-Tr\left[\mathbf{M}^{-1}(\zeta)\frac{\partial\mathbf{M}(\varphi)}{\partial\zeta_p}\mathbf{M}^{-1}(\zeta)\frac{\partial\mathbf{M}(\zeta)}{\partial\zeta_q}\right]$$

$$\left.+Tr\left[\mathbf{M}^{-1}(\zeta)\frac{\partial^2\mathbf{M}(\zeta)}{\partial\zeta_p\partial\zeta_q}\right]\right]$$

mit $\mathbf{M}(\zeta) = \mathbf{T}^H(\zeta)\,\Pi_b\,\mathbf{T}(\zeta)$, und wobei $\zeta$ ein Vektor von Dimension $P$ ist, dessen Elemente mit $\zeta_p$ notiert sind, und wobei $1 \leq p,\ q \leq P$.

**7.** Verfahren nach Anspruch 6, **dadurch gekennzeichnet, dass** die Initialisierungspunkte $\zeta_m^0$ von einer an jeder Station erhaltenen unabhängigen Schätzung kommen, und dadurch, dass die Suche der Minima $\{\zeta_m, 1 \leq m \leq M\}$, so dass $J(\hat{\zeta}_m) < \eta$, wenigstens einen Schritt der direkten Optimierung des Kriteriums $J(\varphi)$ beinhaltet.

**8.** Verfahren nach Anspruch 6 oder 7, **dadurch gekennzeichnet, dass** die Initialisierungspunkte $\zeta_m^0$ von einer an jeder Station erhaltenen unabhängigen Schätzung kommen, und dadurch, dass die Suche der Minima $\{\hat{\zeta}_m, 1 \leq m \leq M\}$, so dass $J(\hat{\zeta}_m) < \eta$, wenigstens Folgendes beinhaltet: einen Schritt des Optimierens des Kriteriums $J(\zeta)$ auf der Basis eines Ableitungsalgorithmus des Gauss-Newton-Typs, initialisiert durch die Parameter $\{\hat{\zeta}_m, 1 \leq m \leq M\}$, separat geschätzt an jeder Station, oder auch durch das Ergebnis des Optimierungsschrittes von Anspruch 7.

**9.** Verfahren nach Anspruch 1, **dadurch gekennzeichnet, dass** der Schritt des Schätzens der Positionsbestimmungsparameter $\Phi_i = \{\varphi_{li} \dots \varphi_{Mi}\}$ die folgenden Schritte beinhaltet:

Bilden einer Folge-Kovarianzmatrix von Dimension $NxN$, die einen Mittelwert der Matrizen auf allen erkannten Frequenzen bildet:

$$\mathbf{R}_i = \sum_{j=1}^{M_i} \mathbf{v}_j^i \left(\mathbf{v}_j^i\right)^H$$

wobei N die Gesamtzahl der Sensoren ist;
Minimieren des folgenden Kriteriums:

$$C_i\left(\varphi,\rho\right) = \frac{\mathbf{u}^H(\rho,\varphi)\Pi_i\mathbf{u}(\rho,\varphi)}{\mathbf{u}^H(\rho,\varphi)\mathbf{u}(\rho,\varphi)}$$

wobei die nachfolgende Matrix $\Pi_i$ der MUSIC-Rauschprojektor ist, der auf der Basis der eigenen Elemente von $\mathbf{R}_i$ (den $N\text{-}M_i$ schwächsten Eigenwerten der Matrix) erhalten werden, und in dem Wissen, dass:

$$\mathbf{u}(\mathbf{p},\varphi) = \mathbf{A}(\varphi)\rho,\ \text{mit } \mathbf{A}(\varphi) = diag(\mathbf{a}_1(\Theta_l) \dots \mathbf{a}_K(\Theta_K))$$

der sich auf die Minimierung des folgenden Kriteriums reduzieren lässt:

$$C_i^{opt}\left(\varphi\right) = \frac{\det\left(\mathbf{A}^H(\varphi)\Pi_i\mathbf{A}(\varphi)\right)}{\det\left(\mathbf{A}^H(\varphi)\mathbf{A}(\varphi)\right)}$$

Ermitteln der $M_i$ Minima des Kriteriums $C_i^{opt}(\varphi)$, die die Positionsbestimmungsparameter $\varphi_{mi}$ sind.

**10.** Positionsbestimmungsverfahren nach Anspruch 1, **dadurch gekennzeichnet, dass** es in der zweiten Ordnung die folgenden zusätzlichen Schritte beinhaltet:

einen Schritt des Schätzens der Kovarianzmatrix der Beobachtungen auf der Basis der Signale x(t), wobei t zum Intervall {1, T} gehört

$$\hat{\mathbf{R}}_{yy} = \frac{1}{T}\sum_{i=1}^{T}\mathbf{y}\left(i\times T_e\right)\mathbf{y}^{H}\left(i\times T_e\right)$$

wobei in dem Wissen, dass die Beobachtung y(t) nach einer finiten Anzahl von Antwortkomponenten modelliert wird:

$$\mathbf{b}(f_1,\,\boldsymbol{\rho}_m,\boldsymbol{\varphi}_m)=z(f_l)\otimes\mathbf{u}(\boldsymbol{\rho}_{lm},\,\boldsymbol{\varphi}_m),\;\text{mit}\;\mathbf{u}(\boldsymbol{\rho}_{lm},\,\boldsymbol{\varphi}_m)=\begin{bmatrix}\rho_{1.lm}\mathbf{a}_1\left(\boldsymbol{\Theta}_{1.m}\right)\\\rho_{2.lm}\mathbf{a}_2\left(\boldsymbol{\Theta}_{2.m}\right)\\\vdots\\\rho_{K.lm}\mathbf{a}_K\left(\boldsymbol{\Theta}_{K.m}\right)\end{bmatrix}$$

es eine gemeinsame Schätzung der Parameter ($f_l$, $\rho_{lm}$, $\varphi_m$) durch ein der Fachperson bekanntes Verfahren des Hochauflösungstyps gibt, unter Verwendung der Statistiken zweiter Ordnung, die in $\hat{\mathbf{R}}_{yy}$ enthalten sind, und der Vektorantwort $\mathbf{b}$(f,ρ,φ) einer Komponente.

**11.** Positionsbestimmungsverfahren nach Anspruch 1, **dadurch gekennzeichnet, dass** ein Schritt des gemeinsamen Schätzens von Parametern ($f_l$, $\rho_{lm}$, $\varphi_m$) der Ausnutzung von Statistiken der Ordnung 2q der Beobachtung y(t) und unter Nutzung der Antwort $\mathbf{b}$(f,ρ,φ) einer Komponente existiert.

**12.** Positionsbestimmungsverfahren nach Anspruch 10 und 11, **dadurch gekennzeichnet, dass** es einen Schritt des Umkonfigurierens von $\varphi_m$ mit φ ($\mathbf{p}_m$) beinhaltet, der zu einer gemeinsamen Schätzung von ($f_l$, $\rho_{lm}$, $\varphi_m$) unter Nutzung der Vektorantwort $\mathbf{b}$ (f, ρ, φ (p) ) von einer der Raum- Frequenz- Komponenten resultiert.

**13.** Positionsbestimmungsverfahren nach Anspruch 1, **dadurch gekennzeichnet, dass** es eine Subvariation des Schätzens von Positionen der Sender beinhaltet, das wenigstens die folgenden Schritte beinhaltet:

gegeben, dass $\rho_{k,im,}$ = $\rho_{k,m}$ exp (j2πf$_i$ (τ$_k$ (p$_m$)- τ$_l$ (p$_m$) ) ) und somit, dass:

$$\boldsymbol{\rho}_{im} = \boldsymbol{\Lambda}_i\left(\mathbf{p}_m\right)\times\boldsymbol{\rho}_m$$

$$\text{mit}\begin{cases}\boldsymbol{\rho}_m = \begin{bmatrix}\rho_{1.m} & \cdots & \rho_{K.m}\end{bmatrix}^T\\\boldsymbol{\Lambda}_i\left(\mathbf{p}_m\right) = diag\left\{\exp\left(-j2\pi f_i\Delta\tau_1(\mathbf{p}_m)\right) \quad\cdots\quad \exp\left(-j2\pi f_i\Delta\tau_K(\mathbf{p}_m)\right)\right\}\\\Delta\tau_k\left(\mathbf{p}_m\right) = \tau_k\left(\mathbf{p}_m\right)-\tau_1\left(\mathbf{p}_m\right)\end{cases}$$

ist der Vektor **p** der Amplituden eine Funktion des Positionsvektors **p**, da der Vektor φ der Inzidenzen jeder der Stationen auch eine nichtlineare Funktion des Positionsvektors ist, ist der Vektor **u** (p, φ) auch auf der Frequenz $f_i$; durch Nutzen bekannter linearer Algebraeigenschaften wird das folgende Schätzglied der Positionen abgeleitet:

$$\hat{\mathbf{p}}_m = \min_{\mathbf{p}} C_{totale}{}^{opt}(\mathbf{p})$$

mit $$C_{totale}{}^{opt}(\mathbf{p}) = \frac{\det\left(\sum_i \mathbf{Q}_i(\mathbf{p})\right)}{\det(\mathbf{Q}(\mathbf{p}))}$$ .

**Claims**

1. A method for the geolocation of $M$ transmitters Em incident to a network of $K$ stations Sk each composed of $N_k$ elementary sensors and signal processing means, **characterised in that** it comprises at least:

   a) a step during which the observation vector is extended by integrating the sampling period $T_e$ in the observation vector as follows:

$$\mathbf{y}(t) = \begin{bmatrix} \mathbf{x}(t) \\ \mathbf{x}(t-T_e) \\ \vdots \\ \mathbf{x}(t-LT_e) \end{bmatrix} = \sum_{m=1}^{M}\sum_{l=1}^{L} \mathbf{z}(f_l) \otimes \begin{bmatrix} \rho_{1,lm}\mathbf{a}_1(\Theta_{1,m}) \\ \rho_{2,lm}\mathbf{a}_2(\Theta_{2,m}) \\ \vdots \\ \rho_{K,lm}\mathbf{a}_K(\Theta_{K,m}) \end{bmatrix} s_m(f_l, t-\tau_{1,m}) + \mathbf{n}(t)$$

   where $T_e$ and $\rho_{k,lm} = \rho_{k,m} e^{-j2\pi f_l \tau_k(\mathbf{p}_m)-\tau_1(\mathbf{p}_m))}$ is the sampling period corresponding to the band of the receivers according to the Shannon theorem, $\mathbf{x}(t) = [x1(t) \dots \mathbf{x}_k(t)]^T$ correspond to the expression of the signal received on the set of K stations, with the signal on the $k\text{-}nth$ station being expressed as:

$$\mathbf{x}_k(t) = \begin{bmatrix} x_{k,1}(t) \\ x_{k,2}(t) \\ \vdots \\ x_{k,N_k}(t) \end{bmatrix} = \sum_{m=1}^{M} \rho_{k,m}\, \mathbf{a}_k(\Theta_{k,m})\, s_m(t-\tau_{k,m}) + \mathbf{n}_k(t)$$

   • $x_{k,n}(t)$ is the $t\text{-}nth$ sample of the signal output from the $n\text{-}nth$ sensor of the $k\text{-}nth$ station, sampled at the frequency $F_e=1/T_e$,
   • $s_m(t)$ corresponds to the $m\text{-}nth$ time signal transmitted by the source at the instant t, whilst considering that the signals of the transmitters are independent of each other,
   • $\rho_{k,m}$ and $\Theta_{k,m}$ are the complex amplitude and the vector parameter of interest, respectively, of the $m\text{-}nth$ source on the $k\text{-}nth$ station, the vector $\Theta_{k,m}$ is the direction of arrival on the station $k$, seen as a function of the position in the plane or the space,
   • $\tau_{k,m}$ is the travel time between the $m\text{-}nth$ source and the station k,
   • $\mathbf{a}_k(\Theta)$ is the response of the $k\text{-}nth$ network of sensors to a narrow band source of frequency $f_0$ at the station k, which depends on the parameter $\Theta$, the carrier $f_0$ corresponds to the central frequency of the receivers,
   • $\mathbf{n}_k(t)$ is the additive noise present on the $k\text{-}nth$ station at the instant t,

   b) a step of jointly estimating the angles of arrival or the positions of the transmitters on each of said stations using the following linear model,

$$\mathbf{y}(t) = \begin{bmatrix} \mathbf{x}(t) \\ \mathbf{x}(t - T_e) \\ \vdots \\ \mathbf{x}(t - LT_e) \end{bmatrix} = \sum_{m=1}^{M} \sum_{i=1}^{L} \mathbf{z}(f_i) \otimes \begin{bmatrix} \rho_{1,lm}\mathbf{a}_1(\mathbf{\Theta}_{1,m}) \\ \rho_{2,lm}\mathbf{a}_2(\mathbf{\Theta}_{2,m}) \\ \vdots \\ \rho_{K,lm}\mathbf{a}_K(\mathbf{\Theta}_{K,m}) \end{bmatrix} s_m(f_l, t - \tau_{1,m}) + \mathbf{n}(t)$$

with $\rho_{k,lm} = \rho_{k,m}e^{-j2\pi f_l(\tau_k(\mathsf{p}_m) - \tau_l(\mathsf{p}_m))}$, in view of a geolocation or a step of direct geolocation by jointly estimating coordinates of the transmitters in the plane or in the space, $s_m(f_l, t)$ corresponds to the signal of a filter in band 1/Lte centred around the frequency fl where m corresponds to the *m- nth* source;

c) a step of geolocation of sources on the basis of K-tuples of incidence when a joint estimate of the angles is carried out.

2. The geolocation method according to claim 1, **characterised in that** it comprises in the second order the following additional steps:

a step of estimating the covariance matrix of the observations on the basis of the signals x(t), where t belongs to the interval {1, T}

$$\hat{\mathbf{R}}_{yy} = \frac{1}{T} \sum_{i=1}^{T} \mathbf{y}(i \times T_e) \mathbf{y}^H(i \times T_e)$$

where $(.)^H$ designates the conjugate transpose, the signals $s_m(t)$ are approximated by a finite sum of $Q_m \leq L$ narrowband sources (or components) for the whole network;

a step of estimating the dimension D of the signal space of the covariance matrix $\hat{\mathbf{R}}_{yy}$ using a technique of detecting the number of sources by means of a method known to a person skilled in the art on the basis of the eigenvalues of this covariance matrix;

a step of estimating, of the MUSIC type, the matrix $\Pi_b$ of the noise projector obtained on the basis of the specific elements of $\mathbf{R}_{yy}$

$$\mathbf{\Pi}_b = \mathbf{I}_{NL} - \mathrm{E}_S \mathrm{E}_S^H$$

where $\mathrm{E}_S = [\mathbf{u}_1\ \mathbf{u}_2\ ...\ \mathbf{u}_D]$ is the signal space such that $\mathbf{u}_d$ is the specific vector associated with the *d-nth* largest eigenvalue of the estimate $\hat{\mathbf{R}}_{yy}$ of the covariance matrix of the observation $\mathbf{y}(t)$ given that the rank of $\hat{\mathbf{R}}_{yy} - \hat{\mathbf{R}}_{nn}$ equals $D$, the integer $D$ then corresponding to the number of response narrowband components

$$\mathbf{b}(f_l, \mathbf{p}_m, \boldsymbol{\varphi}_m) = \mathbf{z}(\mathrm{fl}) \otimes \mathbf{u}(\rho_{lm}, \varphi_m) \text{ with } \mathbf{u}(\rho_{lm}, \varphi_m) = \begin{bmatrix} \rho_{1,lm}\mathbf{a}_1(\mathbf{\Theta}_{1,m}) \\ \rho_{2,lm}\mathbf{a}_2(\mathbf{\Theta}_{2,m}) \\ \vdots \\ \rho_{K,lm}\mathbf{a}_K(\mathbf{\Theta}_{K,m}) \end{bmatrix}$$

observed by the vector $\mathbf{y}(t)$.

3. The method according to claim 1, **characterised in that** it comprises the following steps for jointly estimating the angles of arrival of the transmitters on each of the stations with a view to geolocation:

simultaneously using all of the signals received by the stations by considering that the angle of arrival $\Theta_{k,m}$ of the *m-nth* source on the *k-nth* station, comprising the azimuth $\theta_{k,m}$ for a 2D problem or the azimuth and the elevation $\{\theta_{k,m},\ \Delta_{k,m}\}$ in 3D $\Theta_{k,m} = (\theta_{k,m},\ \Delta_{k,m})^T$, is a function of the position $\mathbf{p}_m$ of the source, then a step of determining the set $\Phi = (\varphi_1\ ...\ \varphi_M)^T$ of directions of arrival, where $\varphi_M = \{\Theta_{l,m}^T...\ \Theta_{K,m}^T\}^T$;

the values $\{\varphi_m, 1\leq m\leq M\}$ are estimated by searching for the $M$ local minima of the criterion applied to a space of dimension $K$ for a problem in the plane and $2K$ for a problem in the space;

the response of the $k$-*nth* network of sensors $\mathbf{a}_k(\Theta)$ is obtained either by calibration or by using the following analytical model:

$$\mathbf{a}_k(\Theta) = \begin{bmatrix} e^{j2\pi\frac{f_0}{c}\mathbf{k}^T(\Theta)\mathbf{r}_{1,K}} \\ \vdots \\ e^{j2\pi\frac{f_0}{c}\mathbf{k}^T(\Theta)\mathbf{r}_{N_K,K}} \end{bmatrix}$$

where $\mathbf{r}_{n,K}$ is the position vector of the $n$-*nth* sensor of the station $k$ in the reference of the station $k$ and where $c$ is the wave velocity;

$\mathbf{k}(\Theta)$ is the wave vector associated with the direction $\Theta$ such that:

$$\mathbf{k}(\Theta) = \begin{bmatrix} \cos(\theta)\cos(\Delta) \\ \sin(\theta)\cos(\Delta) \\ \sin(\Delta) \end{bmatrix}$$

once the estimates $\hat{\varphi}_m = [\hat{\Theta}_{1,m}{}^T \dots \hat{\Theta}_{k,m}{}^T]^T$ $(1\leq m\leq M)$ have been obtained, executing a localization algorithm.

4. The method according to claim 1, **characterised in that** the step of geolocation in the plane or in the space is executed as follows:

   with the parameter of interest being $\varphi=\mathbf{p}$, where $\mathbf{p}$ is the position vector in the space that is equal to $[x\ y]^T$ in the plane or $[x\ y\ z]^T$ in the space, where $x$, $y$ and $z$ are the Cartesian coordinates in the plane or the space, let the global vector parameter of interest be $\Phi = [\mathbf{p}_1{}^T \cdots \mathbf{p}_M{}^T]^T$, the method comprises the following steps:

   using the relation linking the angle of arrival on a station to the position of the source in the plane or the space; determining the response of the sensors: $\mathbf{a}_k(\mathbf{p}) = \mathbf{a}_k(\Theta(\mathbf{p})$ . $\mathbf{a}_k(\Theta_k(\mathbf{p}))$ depends on $\Theta_k = (\theta_k\ \Delta_k)^T$, the direction of arrival of the source on the station, seen as a function of the position.

5. The method according to claim 4, **characterised in that** the response of the sensors $\mathbf{a}_k(\Theta(\mathbf{p}))$ is obtained by using the following relation:

$$\begin{cases} \theta_k = \begin{cases} \cos^{-1}\left(\dfrac{x-x_k}{\sqrt{(x-x_k)^2+(y-y_k)^2}}\right), & y \geq y_k \\ 2\pi - \cos^{-1}\left(\dfrac{(x-x_k)}{\sqrt{(x-x_k)^2+(y-y_k)^2}}\right), & y < y_k \end{cases} \\ \Delta_k = \tan^{-1}\left(\dfrac{z-z_k}{\sqrt{(x-x_k)^2+(y-y_k)^2}}\right) \end{cases}$$

$(x_k,y_k,z_k)$ is the position of the $k$-*nth* station in the Cartesian reference identifier; estimating the parameters $\mathbf{p}_m$ $(1\leq m\leq M)$ by searching for the local minima $M$ of the criterion.

**6.** The method according to claim 1, **characterised in that** the step of locating sources comprises a step of estimating location parameters comprising searching for the minima of criteria that are all expressed in the following form:

$$J(\zeta) = \frac{\det\left(\mathbf{T}^H(\zeta)\,\mathbf{\Pi}_b\mathbf{T}(\zeta)\right)}{\det\left(\mathbf{T}^H(\zeta)\,\mathbf{T}(\zeta)\right)}$$

on the basis of an initialisation point $\zeta_m^0$ in the vicinity of a solution $\zeta_m$, a descent algorithm of the Gauss- Newton type, which is known to a person skilled in the art, is obtained by the following iterative method: upon the *i- nth* iteration, a pair $\zeta_m^i$ is deduced from $\zeta_m^{i-1}$ by the following relation:

$$\zeta_m^{\ i} = -\mathbf{H}^{-1}(\zeta_m^{\ i})\nabla(\zeta_m^{\ i}) + \zeta_m^{\ i-1}$$

where $\mathbf{H}(\zeta)$ and $\nabla(\zeta)$ are respectively the Hessian and the gradient of the criterion $J(\zeta)$, the elements of which are provided below:

$$\left[\nabla(\zeta)\right]_p = \frac{\det\left(\mathbf{M}(\zeta)\right)}{\det\left(\mathbf{T}^H(\zeta)\mathbf{T}(\zeta)\right)} Tr\left[\mathbf{M}^{-1}(\zeta)\frac{\partial\mathbf{M}(\zeta)}{\partial\zeta_p}\right]$$

$$\left[\mathbf{H}(\zeta)\right]_{pq} = \frac{\det\left(\mathbf{M}(\zeta)\right)}{\det\left(\mathbf{T}^H(\zeta)\mathbf{T}(\zeta)\right)}\left[Tr\left[\mathbf{M}^{-1}(\zeta)\frac{\partial\mathbf{M}(\zeta)}{\partial\zeta_q}\right]Tr\left[\mathbf{M}^{-1}(\zeta)\frac{\partial\mathbf{M}(\zeta)}{\partial\zeta_p}\right]\right.$$

$$-Tr\left[\mathbf{M}^{-1}(\zeta)\frac{\partial\mathbf{M}(\varphi)}{\partial\zeta_p}\mathbf{M}^{-1}(\zeta)\frac{\partial\mathbf{M}(\zeta)}{\partial\zeta_q}\right]$$

$$\left.+Tr\left[\mathbf{M}^{-1}(\zeta)\frac{\partial^2\mathbf{M}(\zeta)}{\partial\zeta_p\partial\zeta_q}\right]\right]$$

with $\mathbf{M}(\zeta) = \mathbf{T}^H(\zeta)\,\mathbf{\Pi}_b\mathbf{T}(\zeta)$ and where is a vector of dimension $P$, the elements of which are referenced $\zeta_p$ and where $1\le p,\ q\le P$.

**7.** The method according to claim 6, **characterised in that** the points of initialisations $\zeta_m^0$ come from an independent estimate obtained on each station, and **in that** the search of the minima $\{\zeta_m, 1\le m\le M\}$, such that $J(\hat\zeta_m)<\eta$, comprises at least a step of direct optimisation of the criterion $J(\varphi)$.

**8.** The method according to claim 6 or 7, **characterised in that** the points of initialisations $\zeta_m^0$ come from an independent estimate obtained on each station, and **in that** the search of the minima $\{\hat\zeta_m, 1\le m\le M\}$, such that $J(\hat\zeta_m)<\eta$, comprises at least: a step of optimising the criterion $J(\zeta)$ on the basis of a descent algorithm of the Gauss- Newton type initialised by the parameters $\{\hat\zeta_m, 1\le m\le M\}$ estimated separately on each station or even by the result of the optimisation step of claim 7.

**9.** The method according to claim 1, **characterised in that** the step of estimating the location parameters $\Phi_i = \{\varphi_{li} \ldots \varphi_{Mi}\}$ comprises the following steps:

constituting a subsequent covariance matrix of dimension $NxN$ that makes an average of the matrices on all of the detected frequencies

$$\mathbf{R}_i = \sum_{j=1}^{M_i} \mathbf{v}_j^{\ i} \left( \mathbf{v}_j^{\ i} \right)^H$$

with N being the total number of sensors;
minimising the following criterion:

$$C_i(\varphi,\rho) = \frac{\mathbf{u}^H(\rho,\varphi)\mathbf{\Pi}_i \mathbf{u}(\rho,\varphi)}{\mathbf{u}^H(\rho,\varphi)\mathbf{u}(\rho,\varphi)}$$

where the subsequent matrix $\Pi_i$ is the MUSIC noise projector obtained on the basis of the specific elements of $\mathbf{R}_i$ (the $N-M_i$ weakest eigenvalues of the matrix) and given that

$$\mathbf{u}(\mathbf{p},\varphi) = \mathbf{A}(\varphi)\rho \text{ with } \mathbf{A}(\varphi) = diag(\mathbf{a}_1(\mathbf{\Theta}_1) \ldots \mathbf{a}_K(\mathbf{\Theta}_K))$$

that is reduced to the minimisation of the following criterion:

$$C_i^{opt}(\varphi) = \frac{\det\left(\mathbf{A}^H(\varphi)\mathbf{\Pi}_i \mathbf{A}(\varphi)\right)}{\det\left(\mathbf{A}^H(\varphi)\mathbf{A}(\varphi)\right)}$$

determining the $M_i$ minima of the criterion $C_i^{opt}(\varphi)$ that are the parameters of localisations $\varphi_{mi}$.

10. The geolocation method according to claim 1, **characterised in that** it comprises in the second order the following additional steps:

a step of estimating the covariance matrix of the observations on the basis of the signals x(t), where t belongs to the interval {1, T}

$$\hat{\mathbf{R}}_{yy} = \frac{1}{T}\sum_{i=1}^{T} \mathbf{y}\left(i \times T_e\right)\mathbf{y}^H\left(i \times T_e\right)$$

where, given that the observation $y(t)$ is modelled following a finite number of response components:

$$\mathbf{b}(\mathrm{f}_l, \boldsymbol{\rho}_m, \varphi_m) = \mathrm{z}(f_l) \otimes \mathbf{u}(\boldsymbol{\rho}_{lm}, \varphi_m) \text{ with } \mathbf{u}(\boldsymbol{\rho}_{lm}, \varphi_m) = \begin{bmatrix} \rho_{1,lm}\mathbf{a}_1\left(\mathbf{\Theta}_{1,m}\right) \\ \rho_{2,lm}\mathbf{a}_2\left(\mathbf{\Theta}_{2,m}\right) \\ \vdots \\ \rho_{K,lm}\mathbf{a}_K\left(\mathbf{\Theta}_{K,m}\right) \end{bmatrix}$$

there is a joint estimate of the parameters $(f_l, \rho_{lm}, \varphi_m)$ by a method of the high resolution type, known to a person skilled in the art, using the second order statistics contained in $\mathbf{R}_{yy}$ and the vector response $\mathbf{b}(f,\rho,\varphi)$ of a component.

11. The geolocation method according to claim 1, **characterised in that** a step exists of jointly estimating parameters $(f_l, \rho_{lm}, \varphi_m)$, of use of 2q-order statistics of the observation y(t) and using the response $\mathbf{b}(f,\rho,\varphi)$ of a component.

**12.** The geolocation method according to claim 10 and 11, **characterised in that** it comprises a step of reconfiguring $\varphi_m$ with $\varphi(\mathbf{p}_m)$ resulting in the joint estimate of $(f_l, \rho_{lm}, \varphi_m)$ using the vector response $\mathbf{b}(f, \rho, \varphi(p))$ of one of the space-frequency components.

**13.** The geolocation method according to claim 1, **characterised in that** it comprises a sub-variation of estimating positions of the transmitters comprising at least the following steps:

given that $\rho_{k,im} = \rho_{k,m} \exp(j2\pi f_i(\tau_k(p_m) - \tau_l(p_m)))$ and thus that:

$$\boldsymbol{\rho}_{im} = \boldsymbol{\Lambda}_i(\mathbf{p}_m) \times \boldsymbol{\rho}_m$$

$$\text{with} \quad \begin{cases} \boldsymbol{\rho}_m = \begin{bmatrix} \rho_{1,m} & \cdots & \rho_{K,m} \end{bmatrix}^T \\ \Lambda_i(\mathbf{p}_m) = diag\left\{ \exp\left(-j2\pi f_i \Delta\tau_1(\mathbf{p}_m)\right) \quad \cdots \quad \exp\left(-j2\pi f_i \Delta\tau_K(\mathbf{p}_m)\right) \right\} \\ \Delta\tau_k(\mathbf{p}_m) = \tau_k(\mathbf{p}_m) - \tau_1(\mathbf{p}_m) \end{cases}$$

the vector $\mathbf{p}$ of the amplitudes is a function of the position vector $\mathbf{p}$, given that the vector $\varphi$ of the incidences on each of the stations is also a non-linear function of said position vector, the vector $\mathbf{u}(p, \varphi)$ is also at the frequency $f_i$ ; by using known linear algebra properties the following estimator of the positions is deduced:

$$\hat{\mathbf{p}}_m = \min_{\mathbf{p}} C_{totale}{}^{opt}(\mathbf{p})$$

$$\text{with} \quad C_{totale}{}^{opt}(\mathbf{p}) = \frac{\det\left(\sum_i \mathbf{Q}_i(\mathbf{p})\right)}{\det(\mathbf{Q}(\mathbf{p}))} \quad .$$

$$\mathbf{p}_m = \begin{bmatrix} x_m \\ y_m \end{bmatrix} \quad E_m$$

$\tau_k$

$S_K$

$S_1$

$\Theta_k$

$S_k$

Station 1        Station $k$        Station K

## FIG.1

$E_2$

$E_1$

$K(\theta_{11})$ et $K(\theta_2)$
**Vecteurs d'onde**

$K(\theta_2)$        $K(\theta_{11})$

$K(\theta_{12})$

$\theta_{11}$

$\theta_{12}$

$C_i$

10        11

## FIG.2

2        $\theta_m$

n        1

Plan des capteurs

$\Delta_m$

$p_n$

$k(\Theta_m)$

O

## FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009065943 A

**Littérature non-brevet citée dans la description**

- Space frequency direction finding in wide-band and multi-path contexts. *ACOUSTICS, SPEECH, AND SIGNAL PROCESSING, 2000. ICASSP'00. Proceeding S. 2000 IEEE international conference,* 05 Juin 2000, vol. 5, 3113-3116
- **DE JIAN MAO et al.** a new algorithm for joint DOA and multipath delay estimation : separable dimension subspace method. *Statistical signal Processing, 2001, Proccedings of the 11 TH IEEE SIGN AL Processing Workshop on 6-8 August 2001, Piscataway, NJ, USA, IEEE,* 06 Août 2001, 504-507

- **ML. MC CLOUD ; L.L SCHARF.** A new subspace identification algorithm for high resolution DOA estimation. *IEEE Trans on Antenna and propagation,* Octobre 2002, vol. 50 (10
- **X.MESTRE ; M.A. LAGUNAS.** Modified subspace algorithms for DOA estimation with large arrays. *IEEE Transactions on signal processing,* Février 2008, vol. 56 (2